# EUROPEAN PATENT APPLICATION

(11) **EP 1 432 167 A2**
(43) Date of publication of application: **23.06.2004**
(21) Application number: 03020570.2
(22) Date of filing: 18.09.2003
(51) Int. Cl.: H04L 1/24

(54) **System and method for characterizing the performance of data communication systems and devices**

(30) Priority: 18.12.2002 US 323220
(71) Applicant: Accelerant Networks, Inc., Beaverton, OR 97006 (US)
(72) Inventor: Searles, Shawn, Austin, TX 78737 (US); Weinlader, Daniel Keith, Portland Oregon 97229 (US); Sonntag, Jeffrey, Portland Oregon 97229 (US); Lefferts, Robert B., Portland Oregon 97225 (US); Stonick, John T., Portland Oregon 97229 (US); Gong, Xue-Mei, Portland Oregon 97229 (US); Martin, David A., Portland Oregon 97229 (US)
(74) Representative: Eisenführ, Speiser & Partner

(57) **Abstract**

In one aspect, the present invention is a technique of, and a system and sensor for measuring the performance of high-speed data communication systems, and components used therein. In one embodiment, the present invention measures the performance, for example the error rate ER, of such systems and/or components in situ - that is, in the environment and/or in the configuration in which the system and/or components are used during normal or typical operation (for example, when the system and/or component is transmitting and receiving user data). For this purpose a system parameter, e.g. the signal amplitude, is set to different levels, for each level an error rate is determined, and the final error rate is determined, and the final error rate is determined through extrapolation. In this way, a more accurate representation of the performance of the system (and components thereof) may be determined.

## Description

### BACKGROUND OF THE INVENTION

This invention relates to systems and techniques that are used to characterize, measure and/or evaluate the performance of data communication systems and devices used therein; and more particularly, in one aspect, to measure, inspect, characterize and/or evaluate the transmission error rate of data communication systems (for example, communication systems implemented in wired type environments) and components related thereto or used therein.

Generally, all data communication systems exhibit or experience some errors when communicating data during normal operation. In this regard, a transmitter of a data communication system may transmit a given bit or symbol (for example, a binary low) and the receiver may interpret that bit or symbol improperly (for example, a binary high). The accuracy of the communications over a given period of time is generally known as an error rate ("ER", for example, data error rate, bit error rate, byte error rate and/or symbol error rate). The ER may be characterized as the number of errors (E) that occur for a given amount of transmitted data (Transmission Rate (R) x Time (T)); that is: ER = E/(RxT).

Data communication systems typically specify a minimum acceptable ER under a given set of operating conditions. For example, under normal operating conditions, a typical ER of a high-speed (e.g., 10 gigabits/second) data communication system may be specified as no more than one error per month (i.e., an ER in the order of 10⁻¹² to 10⁻¹⁶). System and component providers, as well as users, may have difficulty in measuring and/or demonstrating the ER of such a data communication system because the testing of such a data communication system is both time-consuming and costly. That is, for example, to accurately characterize the ER of a given component (for example, a data transceiver) of a data communication system requires prohibitively long test times which tend to increase the cost of such data communication systems and components used therein. Indeed, the test time to accurately measure the minimum acceptable ER in the order of 10⁻¹² to 10⁻¹⁶ may be between 10 months and 10 years, depending on the data rate and degree of confidence desired.

A conventional technique employed to reduce the test time of data communication systems and/or components thereof is to accelerate the testing procedure by, for example, testing a number of systems and/or components in parallel and "combining" the information of the individual systems and/or components to infer an ER of the system and/or component(s) of that system. While the parallel compilation of data may appear to accelerate testing, and thereby reduce test time, the resulting information may not accurately represent the ER of any one system and/or any one orgroup of components of that system.

Another conventional technique to reduce the test time of data communication systems is to test individual components of the system in a test environment. In this regard, the components of the system are tested in a laboratory environment, using well known test methods, in order to measure or determine the characteristics of the device. The laboratory environment typically does not represent the actual environment that the system and/or components thereof will be used -- that is, the environment in which the system is employed to communicate user or customer data. Moreover, from the relatively few samples, a determination is made or inferred as to all of the same components as well as to the system as a whole.

Thus, there is a need for a system and technique to overcome the shortcomings of one, some or all of the conventional systems and techniques. In this regard, there is a need for an improved system and technique to characterize the performance of high-speed data communication systems, and devices used therein, including, for example, systems and devices implemented in a backplane environment.

In addition, there is a need for a system and technique of characterizing the performance (for example, the ER) of high-speed data communication systems, and devices used therein, in situ - that is, in the same (or substantially similar) environment and/or in the same (or substantially similar) system configuration in which the system and devices are used during normal operation (i.e., operation where the system communicates user data). In this regard, there is a need for a system and technique that more accurately characterizes the performance of the system (and devices implemented therein) in the same (or substantially the same) environment and/or in the same (or substantially the same) system configuration that is employed to transmit user data. In this way, a more accurate characterization of the system and/or device performance may be measured, determined and/or obtained, for example, at installation (for example, initial set-up) and/or after installation (for example, during system evaluation/inspection, during system routine initialization, re-initialization, normal operation and/or at start-up or power-up).

### SUMMARY OF THE INVENTION

In a first principal aspect, the present invention is a communication system capable of determining a first data error rate of data transmission of the system wherein the system has a first error rate of transmission when the communication system is in a first configuration. The communication system of this aspect includes transmitter circuitry, coupled to a communications channel (for example, a backplane), to transmit a first data stream on the communications channel. The transmitter includes output driver circuitry, coupled to the communications channel, to output the first data stream, wherein the output driver includes at least one parameter, for example, the amplitude of the output signal, having a plurality of states and wherein the communication system is in the first configuration when the parameter of the output driver circuitry is in a first state.

The communication system may also include receiver circuitry, coupled to the communications channel, to receive a second data stream in response to the first data stream transmitted by the transmitter circuitry. The receiver circuitry includes error detection circuitry, coupled to the communications channel, to detect differences between the data of the first data stream and the data of the second data stream.

The communication system of this aspect may also include a processor, coupled to the receiver circuitry, to determine second, third and fourth error rates of the system when the parameter of the output driver circuitry is in a second state, a third state, and a fourth state, respectively, and wherein the processor determines the first error rate of the system using the second, third and fourth error rates. In one embodiment of this aspect of the invention, the processor determines a first mathematical relationship using the second, third and fourth error rates, and based on the first mathematical relationship, calculates the first error rate.

In one embodiment, the processor is disposed on an integrated circuit including the receiver circuitry. In another embodiment, the processor is disposed on an integrated circuit including the transmitter circuitry. In yet another embodiment, the processor is disposed on a discrete integrated circuit.

In one embodiment, the processor may determine fifth, sixth and seventh error rates of the system when the parameter of the output driver circuitry is in a fifth state, a sixth state, and a seventh state, respectively. The processor may determine the first error rate of the system using the fifth, sixth and seventh error rates. Indeed, the processor may determine a second mathematical relationship using the fifth, sixth and seventh error rates, and based on the second mathematical relationship, calculates the first error rate. The first mathematical relationship and the second mathematical relationship may provide a double-sided locus.

In a second principal aspect, the present invention is a communication system capable of determining a first data error rate of data transmission of the system wherein the system has a first error rate of transmission when the communication system is in a first configuration. The communication system of this aspect also includes transmitter circuitry, coupled to communications channel (for example, a backplane), to transmit a first data stream on the communications channel. The transmitter of this aspect includes output driver circuitry, coupled to the communications channel, to output a first data stream; and equalization circuitry, coupled to the output driver circuitry, wherein the equalization circuitry includes at least one parameter having a plurality of states and wherein the communication system is in the first configuration when the parameter of the equalization circuitry is in a first state.

The system also includes receiver circuitry, coupled to the communications channel, to receive a second data stream and a processor. The processor is coupled to the receiver circuitry to determine second, third and fourth error rates of the system when the parameter of the equalization circuitry is in a second state, a third state, and a fourth state, respectively. The processor determines the first error rate of the system using the second, third and fourth error rates.

In one embodiment, the parameter is the amplitude of an equalization signal generated by the equalization circuitry. In another embodiment, the parameter may be the duration of the equalization signal. In yet another embodiment, parameter may be the location of the equalization signal.

In a third principal aspect, the present invention is a method for determining a first error rate of transmission of data in a communication system in situ, wherein the first error rate of the data transmission is the number of differences between a transmitted data stream and a received data stream, for a period of time, when a parameter of the communication system is in a first state. The method of this aspect includes:
programming the parameter in a second state and transmitting a data stream via a communications channel;
receiving a data stream, via the communications channel, in response to the transmitted data stream;
calculating a second error rate when the parameter is in the second state by determining the number of differences between the transmitted data stream and the received data stream, for a period of time, when the parameter is in the second state;
programming the parameter in a third state;
calculating a third error rate when the parameter is in the third state by determining the number of differences between the transmitted data stream and the received data stream, for a period of time, when the parameter is in the third state;
programming the parameter in a fourth state;
calculating a fourth error rate when the parameter is in the fourth state by determining the number of differences between the transmitted data stream and the received data stream, for a period of time when the parameter is in the fourth state;
determining a first mathematical relationship between the second error rate, third error rate and fourth error rate; and
determining the first error rate using the first mathematical relationship.

In one embodiment, the parameter is an operating parameter. In another embodiment, the parameter is a test parameter. Where the parameter is a test parameter, in one embodiment, the test parameter is zero when the parameter is programmed in the first state.

In various embodiments of this aspect of the invention, the parameter is the signal amplitude of the data of the data stream, or the coefficient of a tap of equalization circuitry, or the location of a tap of equalization circuitry, or the duration of the equalization signal attributed to a tap of equalization circuitry. In other embodiments, the parameter is the jitter of a clock signal, or the resistance of a reference generation circuitry, or the resistance of a termination resistor, or the coefficient of a data tap of equalization circuitry.

In another embodiment of this aspect of the invention, the first error rate of transmission of data in the communication system is determined in situ after installation of the communication system. In another embodiment, the first error rate of transmission of data in the communication system is determined in situ periodically after installation of the communication system. In yet another embodiment, the first error rate of transmission of data in the communication system is determined in situ intermittently after installation of the communication system. Moreover, in another embodiment, the first error rate of transmission of data in the communication system is determined in situ, after installation of the communication system, in response to a command from an operator.

### BRIEF DESCRIPTION OF THE DRAWINGS

In the course of the detailed description to follow, reference will be made to the attached drawings. These drawings show different aspects of the present invention and, where appropriate, reference numerals illustrating like structures, components, materials and/or elements in different figures are labeled similarly. It is understood that various combinations of the structures, components, materials and/or elements, other than those specifically shown, are contemplated and are within the scope of the present invention.
FIGURE 1 is a block diagram representation of an exemplary communication system including a transmitter and a receiver;
FIGURE 2 is a block diagram representation of transmitter/receiver pairs of an exemplary communication system;
FIGURES 3A, 3B and 3C are block diagram representations of a pair of transceivers, each including a plurality of channels (i.e., links) or transmitter/receiver pairs, according to certain embodiment(s) of the present invention;
FIGURES 4A and 4B are more detailed block diagram representations of a portion a of transmitter according to one embodiment of the present invention;
FIGURE 5 is a detailed block diagram representation of an output driver according to one embodiment of the present invention;
FIGURE 6 is more detailed block diagram representation of a portion a receiver according to one embodiment of the present invention;
FIGURE 7 is a block diagram representation of a pair of transceivers, each including a plurality of channels (i.e., links) or transmitter/receiver pairs and at least one processor, according to one embodiment of the present invention;
FIGURE 8 is a block diagram representation of a communication system, having a plurality of transceivers, according to one embodiment of the present invention;
FIGURE 9A illustrates an exemplary performance characteristic (e.g., ER) of the system versus relative units of an operating or a test parameter where the parameter is the output signal level of the output driver of the transmitter; and the system reduces the signal level of the output driver from the normal or mission-mode settings for the purpose of degrading system performance;
FIGURE 9B illustrates an exemplary performance characteristic (e.g., ER) of the system versus relative units of an operating or a test parameter where the parameter is the output signal level of the output driver of the transmitter; and the system increases the signal level of the output driver from the normal or mission-mode settings for the purpose of degrading system performance;
FIGURES 9C and 9D illustrate an exemplary performance (e.g., ER) of a system versus relative units of an operating or a test parameter where the parameter is the signal level of the output driver of the transmitter and the data measured during test mode provides a double-sided locus;
FIGURE 9E illustrates an exemplary performance characteristic (e.g., ER) of the system versus relative units of an operating or a test parameter where the parameter is the amplitude of an equalization signal (i.e., tap coefficient); and the data measured during test mode provides a double-sided locus;
FIGURE 10 illustrates an embodiment of a reference generation circuit, used by or implemented in a receiver, according to one embodiment of the present invention;
FIGURE 11 illustrates an embodiment of clock recovery alignment circuitry, used by or implemented in the receiver, according to one embodiment of the present invention;
FIGURES 12A and 12B illustrate embodiments of variable termination resistors, used by or implemented in a transmitter and/or receiver, according to certain embodiments of the present invention;
FIGURE 13A and 13B are more detailed block diagram representations of a portion a transmitter according to certain embodiments of the present invention;
FIGURES 14, 15 and 16 are detailed block diagram representations of equalization circuitry, in conjunction with additional transmitter circuitry, according to certain embodiments of the present invention;
FIGURES 17A, 17B and 17C are block diagram representations of a pair of transceivers, each including a plurality of channels (i.e., links) or transmitter/receiver pairs, according to certain embodiment(s) of the present invention;
FIGURE 18 illustrates an exemplary performance (e.g., ER) of a given channel or link (transmitter-receiver pair) in the presence and absence of communication by adjacent channels or links where the performance is measured against relative units of an operating or a test parameter where the parameter is the amplitude of an equalization signal (i.e., tap coefficient); and
FIGURE 19 illustrates an exemplary performance (e.g., ER) of a system having five channels or links where the performance is measured against relative units of an operating or a test parameter where the parameter is the amplitude of an equalization signal from a trailing tap.

### DETAILED DESCRIPTION

There are many inventions described and illustrated herein. In one aspect, the present invention is directed to a technique of, and system for measuring, inspecting, characterizing, determining and/or evaluating the performance of high-speed data communication systems, and components used therein. In one embodiment, the present invention measures, inspects, characterizes and/or evaluates the performance, for example the ER, of such systems and/or components in situ - that is, in the environment and/or in the configuration in which the system and/or components are used during, for example, normal, mission-mode or typical operation. In this way, a more accurate representation of the performance of the system (and components thereof) may be measured and/or determined.

The performance of the systems and/or devices may be measured, determined, inspected, characterized and/or evaluated, in situ, at installation and/or after installation (for example, during system evaluation/inspection/test, during system initialization, re-initialization and/or at start-up or power-up). Further, that performance may be periodically and/or intermittently measured, inspected, characterized, determined and/or evaluated to, for example, (1) ensure that the system and/or components are operating properly, (2) ensure that the system and/or devices are within acceptable operating parameters, (3) detect a failure, imminent failure and/or decrease in the performance, and/or (4) predict or determine that a failure and/or decrease in performance may occur in the near future. In this way, components and/or systems whose performance, for example, is at or below minimum acceptable performance criteria may be disabled, disconnected and/or replaced.

For example, in the context of a backplane environment, the performance of the systems may be measured, characterized and/or evaluated, in situ, at installation to determine which transmitter-receiver pair(s) (i.e., channel(s) or link(s)) of the high-speed communication system are more susceptible or likely to fail. Indeed, the performance of each link of the system may be characterized in absolute or relative terms (for example, relative to the other links). In this way, the operator and/or system may intermittently and/or periodically interrogate, inspect, measure and/or evaluate the link(s), or a group of links, that are more susceptible to failure in order to detect, determine or predict a decrease in the system's performance. Thus, the weaker link(s), or a group(s) of weaker links, may be disabled or disconnected from the (user) data path in the system before the operating conditions of the system deteriorate and/or fall below acceptable operating performance parameters. Spare link(s) may also be substituted for such weaker link(s) or such group(s) of weaker links.

The present invention employs an operating parameter or a test parameter to modify the performance characteristics or response of the high-speed communication system to thereby measure, inspect, characterize and/or evaluate the performance, for example the ER, of such system (and/or components thereof) in situ - that is, in the environment and/or in the configuration in which the system and/or components are used during, for example, normal, mission-mode or typical operation. A parameter may be characterized as a degree of "freedom" (or controllability of circuitry or algorithm) that alters, modifies, degrades or varies the performance (e.g. ER) of the system.

In one embodiment, the present invention employs an operating parameter to measure, characterize and/or evaluate, in situ, the performance of high-speed communication systems. In this regard, circuitry that is typically employed during normal operation (i.e., when transmitting user data) may also be employed to facilitate characterization and/or evaluation of the performance (for example, the ER) of the system during test mode. For example, in one embodiment, the operating parameter is the signal level (peak-to-peak) of the output driver. In another embodiment, the operating parameter may be the characteristics of a leading or trailing tap of equalization circuitry (incorporated in the transmitter or receiver), for example, the position of the tap relative to the symbol or data tap, the amplitude of the equalization signal attributed to the tap (which may be determined by the value of the tap coefficient) and its duration (that is, the pulse duration of the equalization signal attributed to the tap). Thus, in this embodiment, the operating parameter is employed by the system and/or device during normal operation (i.e., during communication of user data) as well as to facilitate characterization and/or evaluation of the performance of the system during test mode.

In operation, the data communication system is configured to provide a desired, preset, predetermined and/or optimum response. In this regard, the system is placed in a given operating condition using preset or predetermined values and/or adaptation techniques. For example, the filter and equalization circuitry (for example, tap coefficients) is configured, the output drivers (for example, the peak-to-peak signals levels of the signal output by the drivers) are programmed, the reference generation circuit is programmed, and the clock recovery circuitry is configured. Thereafter, one or more of these parameters may be repeatedly varied from an initial setting and the impact or effect on, or contribution to the performance of the system as a result of the variations may be measured, detected and/or recorded. In this embodiment, the parameter(s) are repeatedly varied to "degrade" the performance of the system (and/or components thereof) so that, for example, the ER of the system or device may be measured within a given time period. The impact or effect on the performance of the system (e.g., the degradation in performance), in relation to the variation, may be used to characterize and/or evaluate the performance of the system (and/or components of the system) when the system is programmed in a mission mode or normal operating configuration.

For example, in those circumstances where the operating parameter is the output signal level of the output driver circuitry, the ER of the system may be measured and/or determined by repeatedly changing or varying the peak-to-peak signal level of the output driver to degrade the performance of the system. This degradation in performance may result in a measurable ER (if sufficiently high to be detected or determined for a given test time) for each of the different transmit voltage levels.

A processor may use the ER information to determine a relationship that permits the processor to determine the ER of the system when the system is established in a given configuration, for example, its mission-mode or normal operational setting. In this regard, a processor may use the data to, for example, determine a mathematical relationship between the ER measured during the test mode, and extrapolate that relationship to determine or predict the ER of the system for the given configuration, for example, the mission-mode or normal operational setting. In this way, a more accurate ER of the system and/or device may be determined when the system and/or component is configured to provide a desired, predetermined and/or optimum response during normal operation.

In another embodiment, the present invention employs a test parameter to measure, characterize and/or evaluate, in situ, the performance of high-speed communication systems. In this regard, circuitry may be incorporated into the system (and/or a component of that system) to facilitate characterization and/or evaluation of the system during a test mode. For example, a leading and/or trailing tap may be incorporated into equalization circuitry for the purpose of characterizing, measuring and/or evaluating the system. That leading and/or trailing tap may not be employed and/or available for equalization during normal operation; however, that leading and/or trailing tap may be used by the system and/or device to facilitate characterization and/or evaluation of the system in the test mode.

Briefly, in operation, the circuitry related to the test parameter is introduced into the signal path and is repeatedly varied from a given or initial setting to determine the performance characteristics of the system when the system is configured for mission-mode or normal operation. The impact or effect on, or contribution to the performance of the system for each variation is measured, determined and/or recorded. For example, where the performance characteristic being measured or evaluated is the ER and the test parameter is the amplitude of an equalization signal attributed to a leading or trailing tap, that tap is incorporated or introduced into the signal path and the ER (if sufficiently high to be detected or determined for a given test time) may be measured, determined and/or recorded for the initial setting of the tap and the operational configuration or settings of the system.

It should be noted that in the above example, the test parameter may be the position of the tap relative to the symbol or data tap, the amplitude of the equalization signal generated by the tap (which may be determined by the value of the tap coefficient), and the duration of the tap (that is, the pulse duration of the equalization signal attributed to the tap).

Thereafter, a characteristic of the tap may be varied, for example, the amplitude of the equalization signal attributed to the tap (i.e., the test parameter) may be increased and/or decreased to degrade the performance of the system. The ER of the system is again measured, determined and/or recorded (if sufficiently high to be measured in a given test time) based on the new coefficient of the tap. The amplitude of the tap may be varied again, and the ER of the system is again measured. This process is repeated until a sufficient, preset, predetermined and/or desired number of ER values are measured, determined and/or recorded.

As mentioned above, a processor employs the measured, determined and/or recorded ER for the given values of the amplitude of the equalization signal attributed to the tap (i.e., the test parameter) to determine a relationship from which the ER of the system may be determined. The processor employs the relationship to determine or predict the ER of the system when the system is configured in its operating or mission-mode configuration which may provide a selected, desired, predetermined and/or optimum response of the system during normal operation.

It should be noted that in one embodiment, the processor may be resident on or integrated in a transmitter, receiver and/or transceiver in the system. In another embodiment, the processor is a discrete device or component in the system. The processor may also be external to the system. Indeed, various functions and operations to implement the test mode and determine the performance of the system (i.e., the ER of the system) may be shared and/or parallel processed via multiple processors that are on or integrated in a device in the system, a discrete device in the system, and/or external to the system.

Moreover, a plurality of transmitters, receivers and/or transceivers may "share" a processor. In this regard, the processor may measure, determine and/or record ER, and determine or predict the ER of a particular setting, for a plurality of channels or links (or components thereof). The processor (and/or operator) may schedule the allocation of processor time (i.e., amount of sharing) based on a predetermined schedule, equal polling and/or on certain performance criteria such as need based (i.e., weaker links or links more susceptible to failure or performance-related issues may receive a greater share of processor time for more frequent characterization than stronger links or links less susceptible to failure or performance-related issues). Indeed, any scheduling technique or criteria, now known or later developed, may be employed and is considered to be within the present invention.

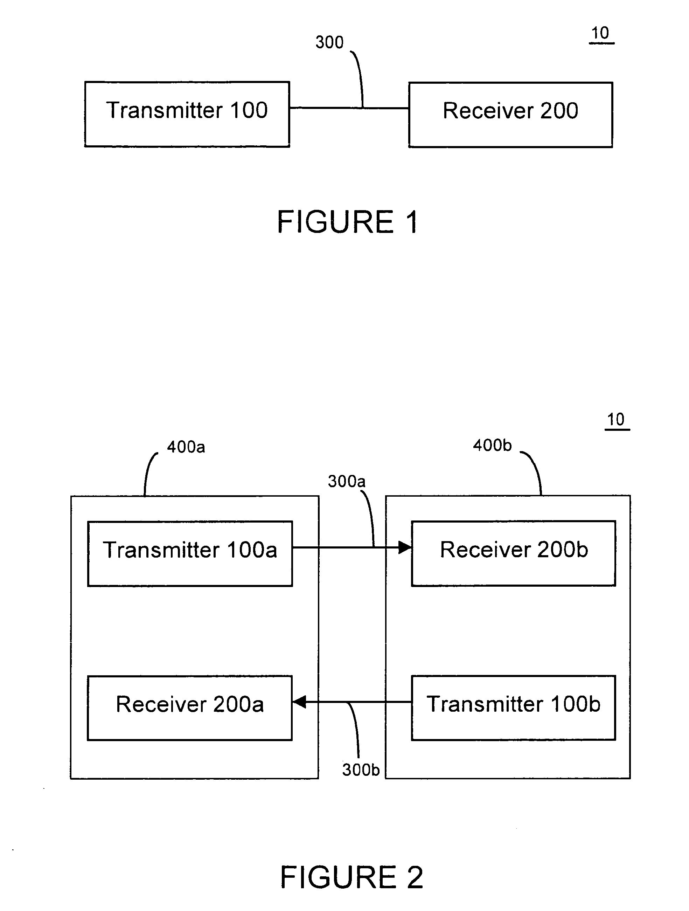

With reference to FIGURE 1, in one aspect, the present invention may be implemented in a high-speed digital communication system 10 including transmitter 100 and receiver 200. Briefly, transmitter 100 is connected to receiver 200 via communications channel 300, for example, a backplane. In one embodiment, transmitter 100 encodes and transforms a digital representation of the data into electrical signals (current or voltage). The transmitter 100 transmits the signals to receiver 200. The received signals, which may be distorted with respect to the signals transmitted into or onto communications channel 300 by transmitter 100, are processed and decoded by receiver 200 to reconstruct a digital representation of the transmitted information.

With reference to FIGURE 2, the digital communication system 10 typically includes a plurality of transmitters and receivers. In this regard, communication system 10 includes a plurality of unidirectional transmitter and receiver pairs (transmitter 100a and receiver 200b; and transmitter 100b and receiver 200a). Transmitter 100a and receiver 200a may be incorporated into transceiver 400a (in the form of an integrated circuit). Similarly, transmitter 100b and receiver 200b are incorporated into transceiver 400b. Additionally, channels 300a and 300b may be either separate physical media (uni-directional links) or may be logical descriptions of the same physical media and be (bi-directional links).

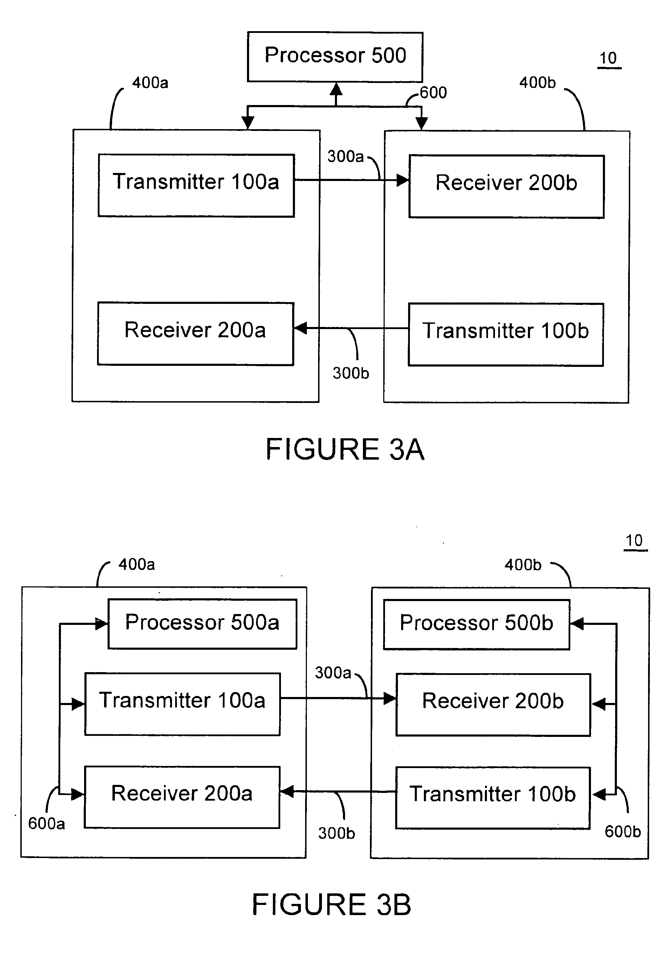

From a system level perspective, there is a plurality of such transmitter/receiver pairs in simultaneous operation, for example, four, five, eight or ten transmitter/receiver pairs, communicating across communications channels 300. With reference to FIGURES 3A-C, in certain embodiments of the present invention, a plurality of transmitters 100 and receivers 200 may be arranged on and/or incorporated in transceivers 400a and 400b. Each transmitter 100 and receiver 200 pair may comprise a link or channel of system 10. In normal operation, associated pairs of transmitters 100 and receiver 200 simultaneously transmit data across channels 300a and 300b.

In one embodiment, transmitters 100 and receivers 200 employ a multilevel pulse amplitude modulated (PAM-n) communications technique. For example, transmitters 100 and receivers 200 may employ a PAM-4 signaling technique to send two bits of data, during each unit time interval, through channels 300. That is, each transmitter/receiver pair may operate in the same manner to send two bits of data for each symbol transmitted through the channels 300.

It should be noted that although certain aspects of the present invention may be described in the context of PAM-4 signaling techniques, the present invention may utilize other modulation formats that encode fewer or more bits per symbol code. Moreover, other communications mechanisms that use different encoding tables, other than four levels, or use other modulation mechanisms may also be used, for example, PAM-5, PAM-8, PAM-16, CAP, and wavelet modulation. In this regard, the techniques described herein are in fact applicable to all modulation schemes, whether now known or later developed, including but not limited to, PAM-4 encoding; and, as such, are intended to be within the scope of the present invention.

It should be further noted that the present invention(s) may be implemented in a wired type environment (for example, microstrip, stripline, printed circuit board (e.g., a backplane) and cable), wireless environment, and/or optical environment. One skilled in the art will recognize that any communications media, when used in conjunction with a corresponding transmitter/receiver pair that is appropriate for a particular medium, may be used to construct a communications channel that may be implemented using the techniques and systems of the present invention. As such, all types of channels of communication (i.e., communications channels) and techniques (for example, wired, wireless or optical), whether now known or later developed, are intended to be within the scope of the present invention.

As mentioned above, in one aspect, the present invention is a technique of, and system for measuring, inspecting, characterizing, determining and/or evaluating the performance, for example the ER, of high-speed data communication systems, and components used therein. In one embodiment, the present invention measures, inspects, characterizes and/or evaluates the performance of such systems and/or components in situ - that is, in the environment and/or in the configuration in which the system and/or components are used during normal or typical operation.

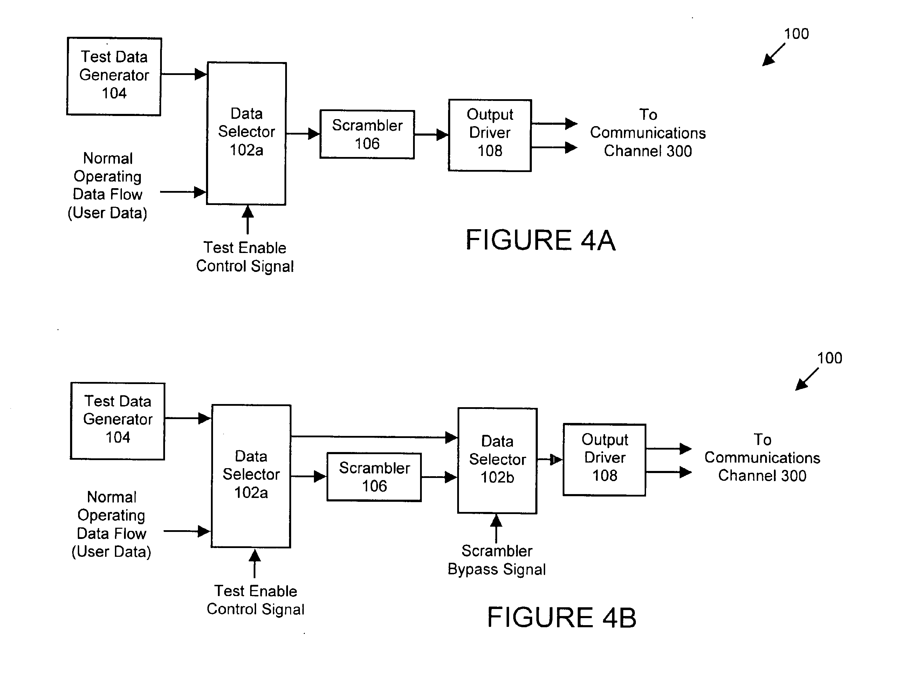

With reference to FIGURE 4A, in one embodiment, transmitter 100 includes a data selector 102a, a test data generator 104, scrambler 106, and an output driver 108. The data selector 102a may be a multiplexer (or a set of pass gates) that is controlled by the test enable control signal. When the test enable control signal is asserted (for example, high), data selector 102a incorporates the test data generator 104 into the transmit data path. In contrast, when the test enable control signal is de-asserted (for example, low), data selector 102a disconnects test data generator 104 from the transmit data path and instead passes user or customer data to communications channel 300.

The test data generator 104 may be a random or pseudo-random data generator that generates a random or pseudo-random data stream. Indeed, any data generator may be implemented. The test data generator 104 is employed by transmitter 100 to generate data that is used to measure, inspect, characterize, determine and/or evaluate the performance, for example the ER, of high-speed data communication system 10 and/or and devices (for example, transmitter 100) of system 10.

With continued reference to FIGURE 4A, in one embodiment, in the test mode, data selector 102a provides the output of the test data generator 104 to scrambler 106. The scrambler 106 scrambles the data stream (for example, random or pseudo-random data stream) so that the resulting scrambled data exhibits certain desirable characteristics or, conversely, may avoid certain characteristics, for example, spectral spikes.

With reference to FIGURE 4B, in another embodiment, the test data stream is not scrambled. In this regard, the output of data selector 102a is provided to scrambler 106 and data selector 102b. The data selector 102b is controlled by the scrambler bypass signal which, when asserted (for example, high), selects the unscrambled data stream and, when de-asserted (for example, low), selects the scrambled data stream (i.e., the output of scrambler 106). In one embodiment, in the test mode, data selector 102b selects the data stream that is not scrambled.

It should be noted that the data selector 102b may also be a multiplexer (or a set of pass gates).

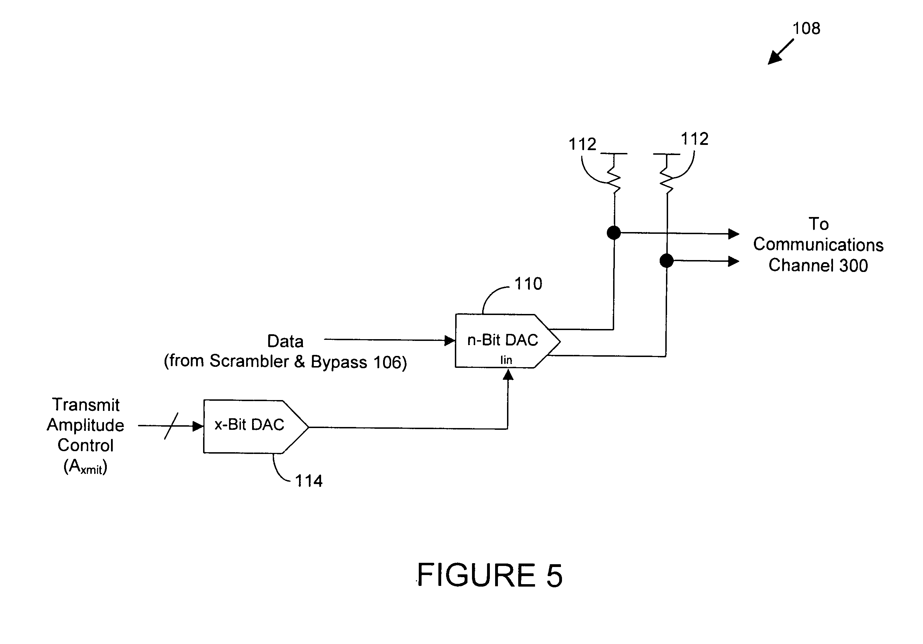

The output driver 108 receives the scrambled (see, FIGURE 4A) or unscrambled (see, FIGURE 4B) test data stream and outputs the data onto communications channel 300. In one embodiment, output driver 108 may include a digital to analog converter (DAC) to convert the digital information to an analog representation thereof. For example, with reference to FIGURE 5, output driver 108 may include DAC 110 and termination resistor 112. The analog output of DAC 110 is converted to a voltage using termination resistors 112.

In one embodiment, DAC 110 is a multiplying digital to analog converter (multiplying DAC or MDAC) which uses the analog representation of a transmit amplitude control (Aₓₘᵢₜ) as a reference current to scale of the output signal. As such, the transmit amplitude control may be used to adjust the output swing and/or strength of transmitter 100. In this regard, the value of the transmit amplitude control determines the reference current for DAC 110 which, in turn, provides a scaling control of the output signal (which is to be applied to the communications channel 300).

The transmit amplitude control may be predetermined, preset and/or programmable (for example, adaptively or externally). The DAC 114 converts the transmit amplitude control into an analog representation which is applied to DAC 110 to provide desired scaling of the analog output signal.

The DAC 114 may also be implemented using an MDAC. It should be noted, however, that DACs 110 and 114 may be implemented using other types of DAC. Indeed, any digital to analog converters may be employed, whether now known or later developed, may be implemented in the present invention to convert digital signals to an analog representation thereof.

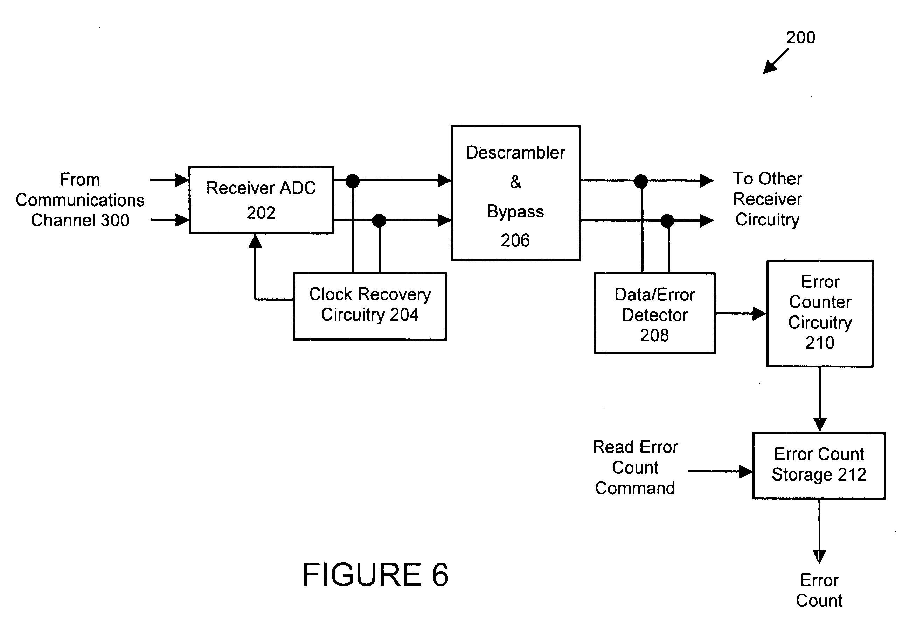

With reference to FIGURE 6, in one embodiment, receiver 200 includes receiver analog to digital converter (ADC) 202, clock recovery circuitry 204, descrambler and bypass 206, data/error detector 208, error counter circuitry 210 and error count storage 212. Briefly, receiver ADC 202 receives the analog signals from transmitter 100 on communications channel 300 and converts those signals to a digital representation. From that digital data, the clock recovery circuitry 204 determines certain clocking information, including the appropriate phase of the clocking, in order to more accurately align the data acquisition, sampling and conversion by receiver ADC 202.

The receiver 200 employs descrambler & bypass 206 to descramble the data that may have been scrambled at transmitter 100. In this regard, where transmitter 100 scrambles the data stream (see, FIGURE 4A), descrambler & bypass 206 descrambles the output of receiver ADC 202 to produce, in the absence of errors, the original data stream (generated by test data generator 104) that was scrambled by scrambler 106 in transmitter 100. The output of descrambler & bypass 206 (for example, the descrambled random or pseudo-random data stream) is applied to data/error detector 208 to determine whether the "received" data corresponds to the "transmitted" data.

In those embodiments where transmitter 100 does not scramble the data stream prior to transmission, descrambler & bypass 206 bypasses the descrambler circuitry in descrambler & bypass 206 and applies the output of receiver ADC 202 into data/error detector 208 to determine whether the "received" data corresponds to the "transmitted" data.

In one embodiment, data/error detector 208 compares the (random or pseudo-random) data stream to the expected or anticipated (random or pseudo-random) data stream. In those instances where the comparison identifies a mismatch or an error between the data sent and the data received, an error is registered and applied to error counter circuitry 210.

The data/error detector 208 may synchronize the anticipated data stream and the received data stream using known synchronization and initialization techniques. For example, a request for synchronization may be received by data/error detector 208, and, in response, data/error detector 208 searches for a known, unique start of pattern. Upon detection of the known, unique start of pattern, data/error detector 208 synchronizes the anticipated data stream to the received data stream.

The receiver 200 employs error counter circuitry 210 to count the number of errors measured or detected by data/error detector 208. The error counter circuitry 210 may be a well-known digital counter. The error counter circuitry 210 maintains a running count of the number of errors measured or detected. The total number of errors measured or detected by data/error detector 208 is stored, by error counter circuitry 210, in error count storage 212.

The error count storage 212 may be any volatile or non-volatile memory device including, for example, an SRAM, DRAM and/or a collection of flip-flops configured as a sufficiently large register. In operation, the total number of errors for a given period may be read from error count storage 212 using the read error count command. In one embodiment, the read error count command is a destructive read in that error count storage 212 is reset to a known state (for example, zero).

In another embodiment, the error counter circuitry 210 counts to one and, maintains and holds that value until reset to indicate the occurrence of an (or another) error. In this embodiment, the error rate may be determined by the time it takes until the counter changes state, for example, goes high. That time may be measured, used and/or recorded to determine an error rate, as discussed below.

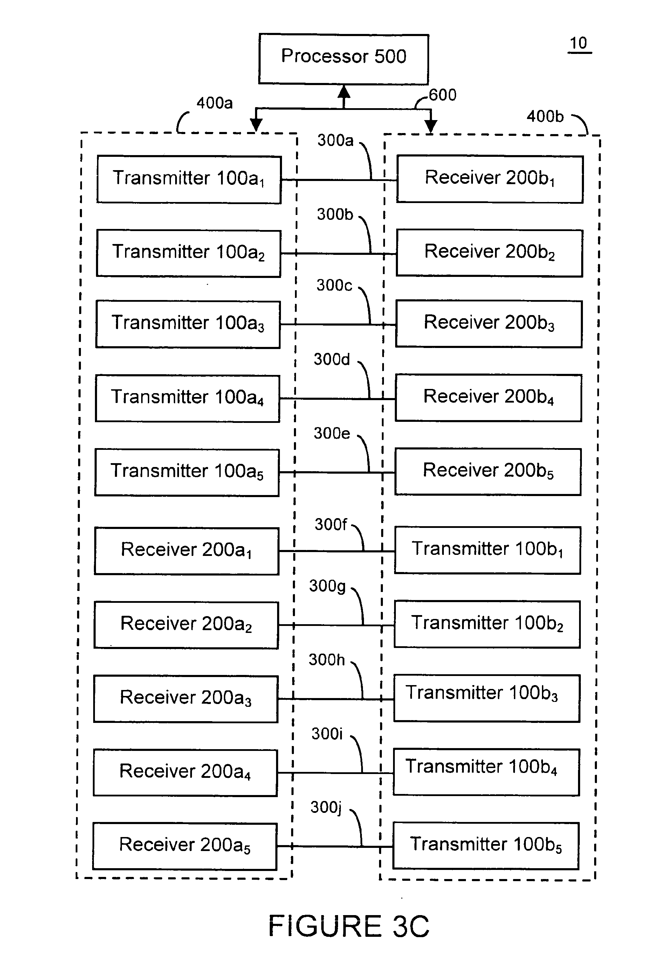

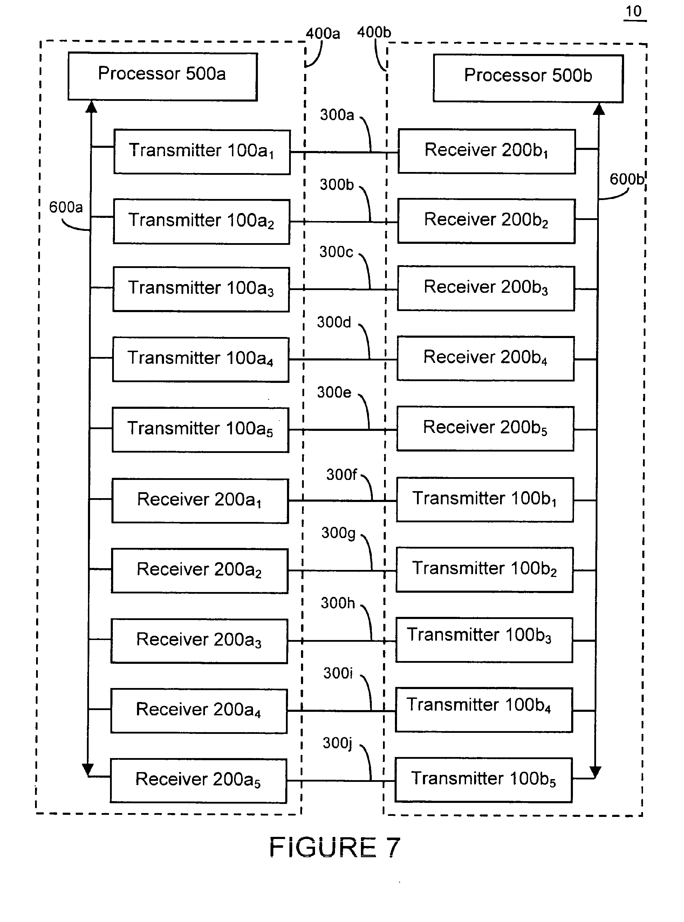

The system 10 may include a processor 500 to read the information maintained in error count storage 212 and, using that information, characterize, determine and/or evaluate the performance of system 10, and components used therein (for example, transmitter 100 and receiver 200). The processor 500 may be an external processing unit, as illustrated in FIGURES 3A and 3C, and/or may be a processing unit that is integrated in or resident on transmitter 100, receiver 200, or, as illustrated in FIGURES 3B and 7, transceiver 400.

In operation, processor 500 may provide commands or instructions to initiate, perform and complete test mode operations. In addition, processor 500 may collect and process certain information generated and recorded in the test mode, for example, the total number of errors stored in error count storage 212 in order to calculate or determine the ER for a given setting of a operating or test parameter. In this regard, processor 500 may use ER related information to calculate or determine a mathematical relationship, for example, a Taylor expansion or regression fit, using the information obtained during test mode. The processor 500 may then use that relationship to determine or predict an ER for actual settings or conditions during normal or mission-mode operations of the system 10.

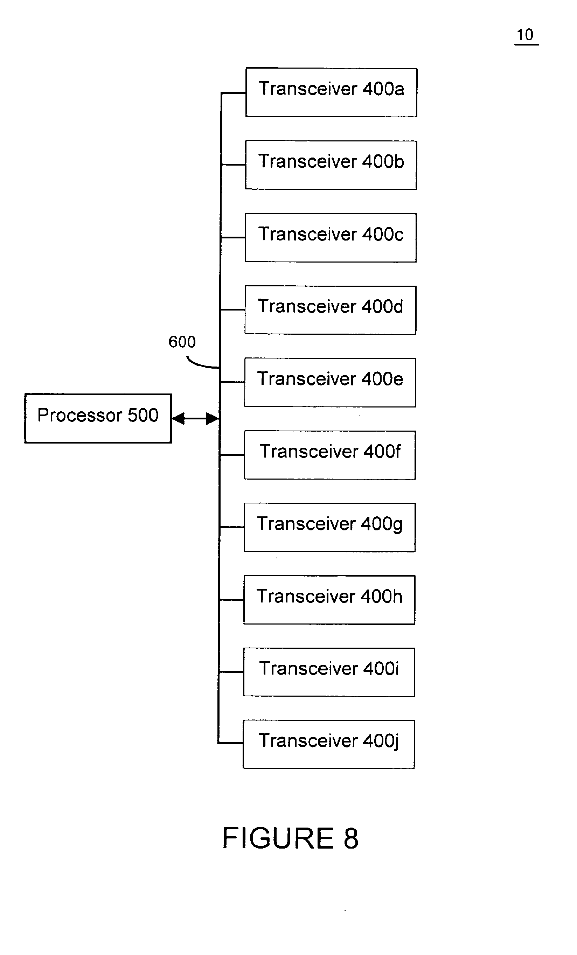

In one embodiment, system 10 includes processor 500 that collects, analyzes and/or collates information relating to the performance of a plurality of transmitters 100, receivers 200 and/or transceivers 400. With reference to FIGURE 8, system 10 includes processor 500 to collect and/or determine performance characteristics of transceivers 400a-j. In certain embodiments, one, some or all of transceivers 400a-j include a resident processor (see, for example FIGURE 7) to collect, process and/or analyze performance data generated during test mode, for example the ER of an associated transceiver 400. In another embodiment, transceivers 400a-j do not include such processors and, as such, processor 500 alone may orchestrate the test mode operations of system 10 as well as collect, process and/or analyze performance data generated during test mode.

As mentioned above, system 10 performs a test mode to characterize, determine and/or evaluate the performance of system 10 (and/or components used therein). In one embodiment, system 10 initiates, conducts and completes a test mode operation after system 10, or certain components of system 10, are configured to provide a desired, predetermined, anticipated and/or optimum performance. The configuration of the system 10 may be the same configuration established during normal operation (i.e., when transmitting and receiving user type data). In this regard, with reference to FIGURES 4, 5 and 6, output driver 108, among other circuitry (for example, termination resistors 112), may be configured or "tuned" (for example, using preset or predetermined values and/or an adaptive algorithm) to provide a certain response or to have a certain performance characteristic or condition during normal operation of system 10.

In addition, the operating characteristics or conditions of circuitry in receiver 200 are also configured, including, for example, receiver ADC 202, clock recovery circuitry 204 and termination resistors (not illustrated). The circuitry in receiver 200 may also be configured using, for example, preset or predetermined values and/or adaptation techniques. Upon placing system 10 in a mission mode condition or configuration (i.e., the desired state to transmit and receive user type data), system 10 may be placed in a test mode to measure, inspect, characterize, determine and/or evaluate its expected performance, for example its expected ER, for that condition or configuration.

It should be noted that the circuitry in transmitter 100 and receiver 200 may be determined, configured and/or controlled in response to a conventional linear adaptive algorithm (for example, Least Mean Square, Recursive Least Square, and stochastic versions thereof) to provide enhanced or optimal reception (maximum eye-opening) at receiver 200. In a preferred embodiment, a stochastic zero forcing algorithm may be employed to provide convergence (stochastic Least Mean Square). In this regard, the adaptive algorithm uses samples of the received signal provided by the receiver to force the edges of the symbol pulse or data signal towards zero. Such an algorithm may have a robust convergence behavior.

As mentioned above, the test mode may be executed or performed using an operating parameter or test parameter. In one embodiment, system 10 employs the output driver 108 to perform the test mode. In this regard, system 10 varies the output signal level (peak-to-peak signal level) of output driver 108 to measure, inspect, characterize, determine and/or evaluate the ER of system 10 for a given condition or configuration of system 10. As such, the performance characteristic of output driver 108 is repeatedly changed or varied from its original, mission mode setting or condition.

In particular, with reference to FIGURES 3A, 3B, 3C, 4, 5 and 7, processor 500 instructs transmitter 100 to initiate test mode, which causes data selector 102 to introduce the data stream generated by test data generator 104 into the normal data path. Thereafter, system 10 repeatedly varies the transmit amplitude control from the initial setting (the setting determined for mission or normal mode operation) to generate a measurable ER for a given transmit amplitude control setting. The processor 500 uses the ER measured, detected and/or recorded for the different settings of the transmit amplitude control to determine the ER of system 10 (or of a given component thereof, for example, transmitter 100).

As mentioned above, in one embodiment, processor 500 may use the data to develop, determine or derive a mathematical relationship (for example, using a Taylor expansion or regression fit) between the data. Using that relationship, processor 500 may extrapolate, determine or predict the ER of system 10 (or a given component) for the predetermined, preset, adaptively determined mission mode or normal mode settings (settings implemented for communications of user data). In this way, a more accurate or representative ER of the system and/or device may be determined for normal mode operation of system 10.

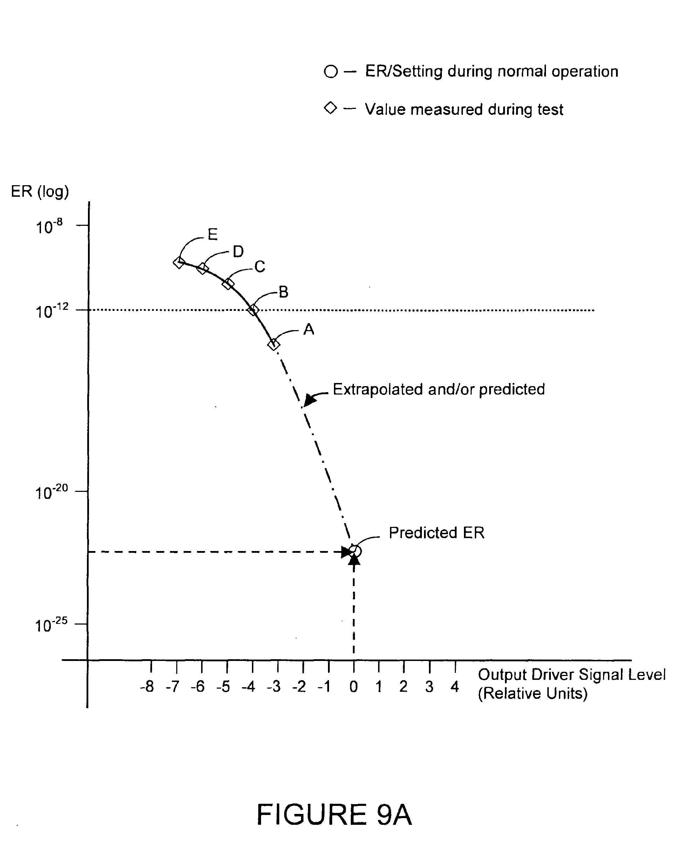

In one embodiment, the transmit amplitude control is repeatedly reduced to cause the amplitude of output driver 108 to correspondingly decrease and the ER of system 10 to increase. For example, with reference to FIGURE 9A, in one embodiment, the transmit amplitude of the output signal output driver 108 may be repeatedly reduced by one Least Significant Bit (LSB), which may be representative of one unit on the abscissa (i.e., x-axis). The transmitter 100 outputs the data stream to receiver 200. The receiver 200 detects the data, detects errors, and counts the errors. The processor 500 determines the ER (if measurable for a given time period and data rate) for that output signal level. As depicted in FIGURE 9A, in this example, the ER is not measurable (for a given time period and data rate) when the amplitude of the output signal is reduced by either one or two units relative to a given or particular setting (for example, its normal operating or mission mode setting).

The system 10 may decrease the amplitude of output driver 108 by three units (for example, 3 LSBs). Again, the data stream is output by transmitter 100 and received by receiver 200. The errors are detected by data/error detector 208, counted by error counter circuitry 210 and stored in error count storage 212. The processor 500 determines the ER for that output signal level. With reference to FIGURE 9A, for that particular variation in the amplitude of the output signal from output driver 108, processor 500 calculates or determines an ER of, for example, 10⁻¹⁴ (identified as "A").

The system 10 may again decrease the voltage of the signal of output driver 108 (which may, thereby degrade the performance of system 10). While offset from the initial or operational setting by four units (i.e., 4 LSBs), the data stream is output by transmitter 100 and received by receiver 200. The errors for a given time period are detected by data/error detector 208 and counted by error counter circuitry 210. The processor 500 reads the error count stored in error count storage 212 and calculates or determines the ER of system 10 to be, for example, 10⁻¹² (identified as "B"). This process is repeated and the ER for a reduction of five, six, and seven units of the amplitude of the output signal from output driver 108 is measured, recorded and determined as, for example, 10⁻¹¹, 10⁻¹⁰ and 10⁻⁹, identified as "C", "D" and "E", respectively.

Using the data obtained, measured and/or recorded during the test mode, processor 500 may determine, calculate and/or derive a relationship based on that data which permits processor 500 to extrapolate, determine or predict the ER of system 10 when configured in the mission mode settings or normal operating conditions. With continued reference to FIGURE 9A, processor 500 may determine, calculate and/or derive a mathematical relationship to fit some or all of the measured ER values of A, B, C, D and E. That mathematical relationship is illustrated as the solid line connecting measured ER values of A, B, C, D and E. The processor 500 may extrapolate that relationship, as illustrated by the dashed line, to determine or predict an ER of system 10 to be 10⁻²² when the output signal level (peak-to-peak) of output driver 108 is configured and/or programmed to its initial, predetermined, preset, enhanced and/or optimum setting represented in FIGURE 9A as zero.

It should be noted that, in one embodiment, processor 500 may use a preset or predetermined number of terms to derive or determine the relationship between the measured ER values. For example, processor 500 may be pre-programmed to employ three terms to derive or determine an appropriate mathematical relationship to explain, describe and/or characterize the measured ER values of A, B, C, D and E (see, FIGURE 9A). Indeed, using a logarithmic scale may reduce any error when extrapolating the relationship for a given number of terms of the relationship because that relationship may be sufficiently dominated by the first several terms (for example, the first three terms, i.e., y₀ + y₁x + y₂x² - where "x" indicate the offset value, "yᵢ" represent the fitted coefficients, and the summation represents the predicted, determined or estimated ER).

In another embodiment, processor 500 may not be pre-programmed to employ a pre-set or predetermined number of terms to determine the relationship between the measured data. In this regard, processor 500 may be programmed to employ any number of terms and determine a suitable relationship based on minimizing the error between the relationship and the measured data. In this way a more accurate mathematical relationship may be derived or determined. Thus, in one embodiment, processor 500 may determine the number of terms to employ based on certain criteria, for example, processing time and maximum error value between relationship and data.

It should be noted that there are many techniques to determine a relationship to explain, describe and/or characterize the measured data and thereby derive or determine a relationship from which the ER of the system may be determined or predicted. As such, all techniques to determine the relationship between the measured data, whether now known or later developed, are intended to be within the scope of the present invention. Indeed, all techniques from which to extrapolate, determine or predict from the measured data or relationship between that data, whether now known or later developed, are intended to be within the scope of the present invention.

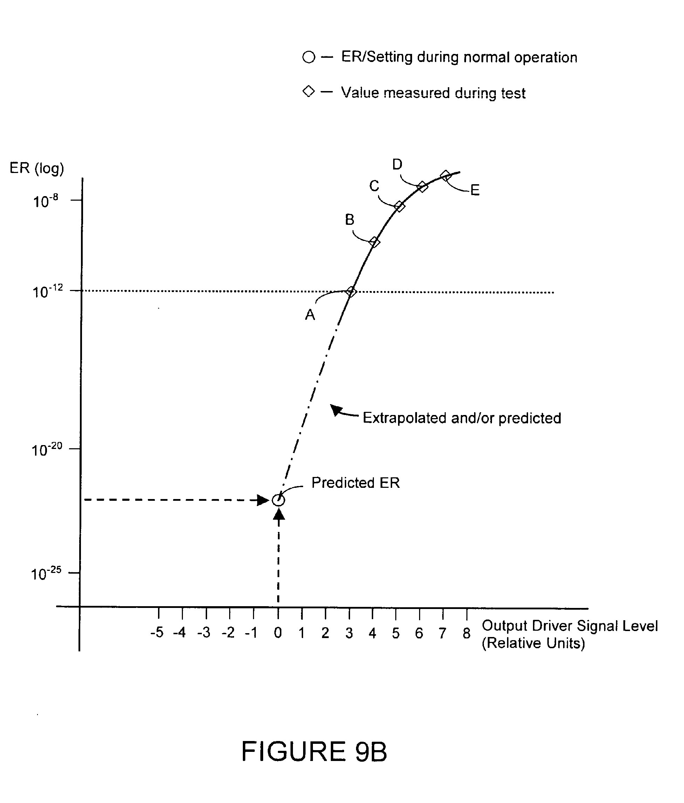

In another embodiment, system 10 enters test mode, as described above, but in this embodiment the output signal level (peak-to-peak) of transmitter 100 is repeatedly increased by appropriately varying the transmit amplitude control. This may cause the ER of system 10 to increase. For example, with reference to FIGURE 9B, the amplitude of output driver 108 may be increased by one LSB, which, similar to FIGURE 9A, may be representative of one unit. The transmitter 100 outputs the data stream to receiver 200 which detects the data and counts the errors. The processor 500 may use the total number of errors for a given time period to determine the ER (if measurable for that time period) for each variation of the output signal level of transmitter 100. For example, with reference to FIGURE 9B, processor 500 determines an ER of 10⁻¹², 10⁻⁹, 10⁻⁸ and 10⁻⁶, identified as "A", "B", "C", "D" and "E", respectively, for the respective variations of the output signal level.

Using the data obtained, measured and/or recorded during the test mode, processor 500 may determine, calculate and/or derive a relationship based on that data. In this way, processor 500 may extrapolate, determine or predict the ER of system 10 for the mission mode settings or conditions of system 10. As illustrated in FIGURE 9B, processor 500 may determine or predict an ER of system 10 to be 10⁻²⁴.

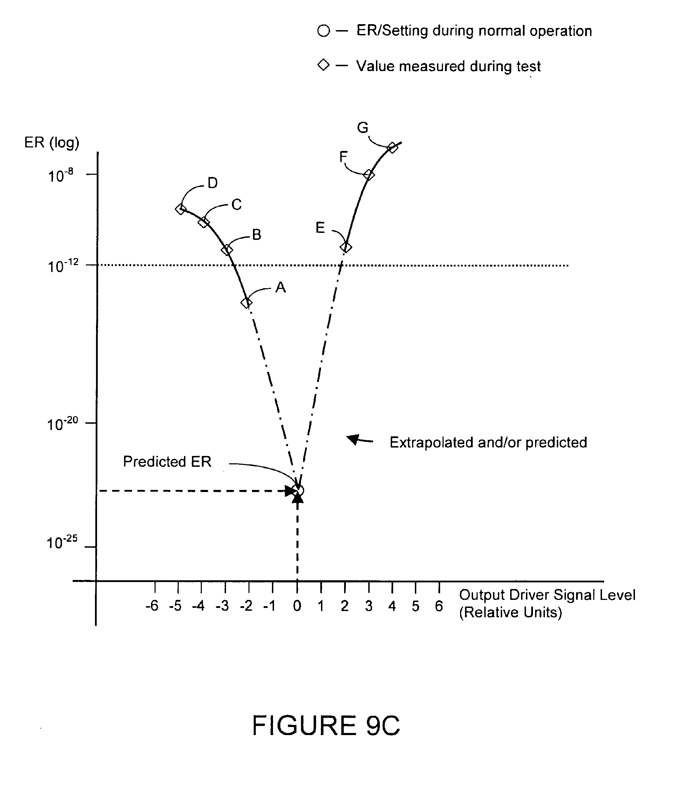

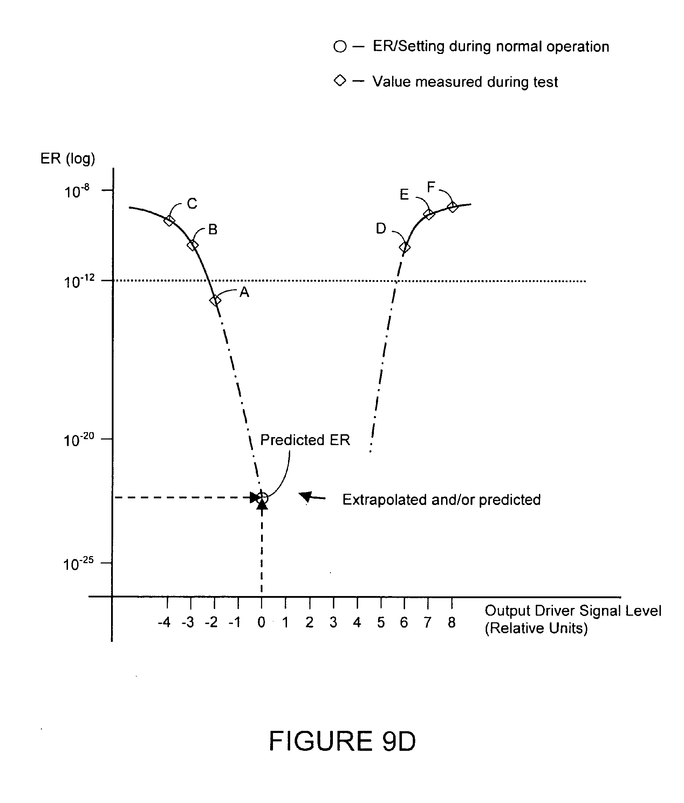

In another embodiment, system 10 may increase and decrease the parameter from its normal or mission mode setting to determine a sufficient number of performance values from which system 10 may determine, derive, predict and/or calculate the performance value of system 10 when established and/or programmed in its normal or mission-mode setting/configuration. In this regard, with reference to FIGURES 9C and 9D, the test performance data allows processor 500 to generate a double-sided locus. The relationships derived, calculated and/or determined by processor 500 may allow the performance of system 10 in normal or mission-mode operation (i.e., when programmed in normal or mission mode configuration) to be determined or predicted as 10⁻²³.

It should be noted that there are many techniques or methods to generate the performance data which permits system 10 to extrapolate, determine or predict the performance of system 10 when programmed in a normal or mission mode configuration. For example, system 10, when configured in test mode, may decrease the selected parameter (FIGURE 9A), increase the selected parameter (FIGURE 9B), or both increase and decrease the selected parameter (FIGURES 9C and 9D). The changes may be implemented in any method or order. Further, the changes may be applied to the operation of the transmitter, the receiver, or both. Indeed, the changes may cause a change in the functional performance of the system (or component thereof) or they may engender coupling in an additional impairment, such as an additive noise source. As such, all methods, orders, and permutations thereof, to collect performance data, whether now known or later developed, are intended to be within the scope of the present invention.

In addition, it should be noted that operating parameters used in test mode may include a range of operation that exceeds that necessary, desired or required for normal operation. In this regard, output driver 108, in normal operation, may be programmed and/or configured to operate within two or three units of a typical value (for example, within 3 LSBs). Where system 10 employs output driver 108 in the test mode, it may be advantageous to include circuitry that permits output driver 108 to operate with 5 to 10 LSBs of a typical value. This may facilitate collecting a sufficient number of performance values in the test mode to more accurately determine, derive and/or calculate the expected, determined or predicted performance of system 10 when programmed or configured in a particular manner (for example, its normal or mission mode configuration).

In addition, it may be advantageous to include a control granularity of the parameter that exceeds that necessary, desired or required for normal operation. For example, in one embodiment, the signal voltage swing of output driver 108, in the test mode, may be programmed and/or configured to operate with greater precision and finer granularity relative to the normal operation. In this way, system 10 may generate more test performance data which may be used by processor 500 to more accurately determine, derive, predict and/or calculate a performance of system 10 in its normal or mission mode configuration.

In one embodiment, the entire test mode operation and/or configuration of system 10 may be controlled or determined by processor 500. In this regard, processor 500 may be pre-programmed or programmable (via, for example, the system designer, operator and/or user). As such, the parameter employed during test mode may be pre-programmed or programmable. Moreover, processor 500 may control or determine the states of the parameter(s), the incremental change of the parameter(s), the order of the change of the states of the parameter(s), and/or the granularity of the states of the parameter(s) may also be pre-programmed or programmable. These and other test mode "variables" may also be re-programmed as desired. Indeed, in one embodiment, the states of the parameter(s), the incremental change of the parameter(s), the order of the change of the states of the parameter(s), and/or the granularity of the states of the parameter(s) may be fixed or substantially fixed.

Further, the system designer, operator and/or user, for example, may also program processor 500 to provide a desired overall test mode time period and desired individual time periods of data collection of the ER of system 10 for a given test mode configuration (i.e., a given parameter setting). The processor 500 may be pre-programmed, re-programmed, and/or programmable to provide a desired overall time period of testing as well as a desired individual time period of data collection for a given test mode configuration. In this way, the test time of system 10 may be adjusted to accommodate different situations; for example, component qualification, system qualification (before and/or after installation), and/or periodic or intermittent testing.

In one embodiment, the overall test time and the individual time periods of test data collection (for a given parameter setting) may be fixed or substantially fixed. In another embodiment, processor 500 may adjust the individual time periods of test data collection according to whether a sufficient number of errors have been detected. The sufficiency of the number of errors may be selected according to a desired confidence in the calculated ER at the given setting.

There are many different criteria upon which to determine or control states of the parameter(s), the incremental change of the parameter, the order of the change of the states of the parameter(s), the granularity of the states of the parameter(s), the time to perform a test mode operation and/or the individual time periods of test data collection (for a given parameter setting). All configurations of the test mode "variables", whether now known or later developed, are intended to be within the scope of the present invention.

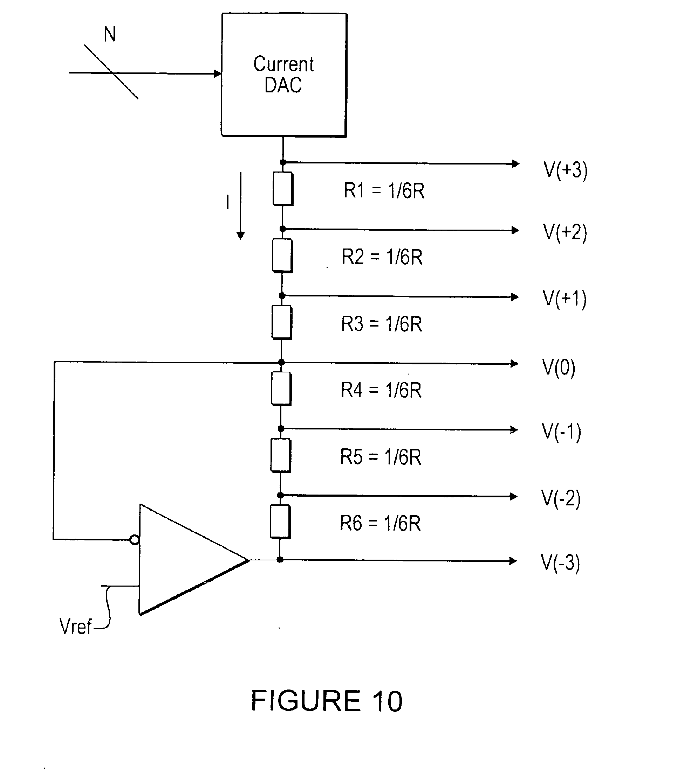

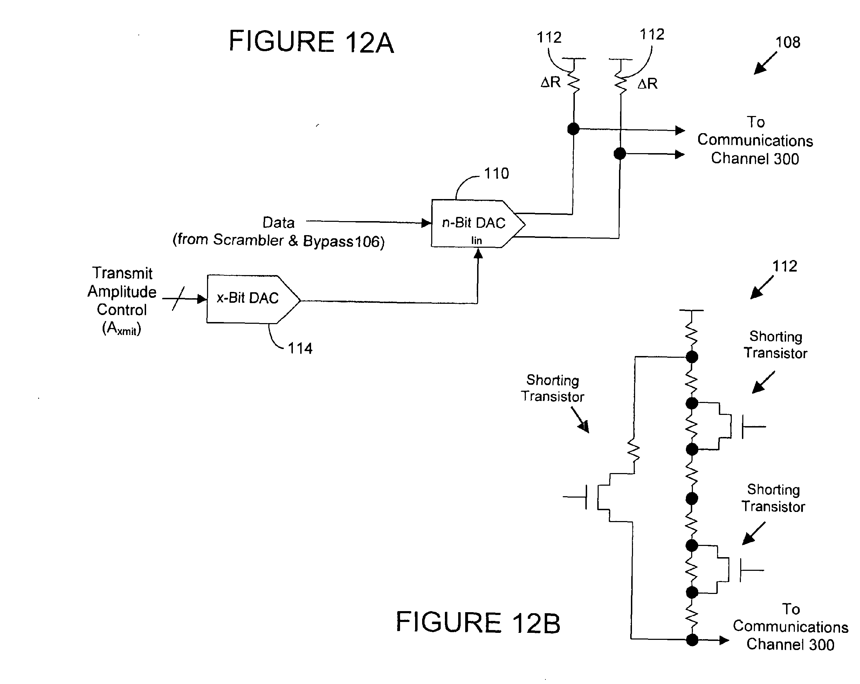

As mentioned above, many different operating and test parameters may be employed by system 10 to generate test performance data which may be used to determine, calculate, extrapolate and/or derive the performance (for example, the ER) of system 10 when programmed in a normal or mission mode configuration. For example, in one embodiment, system 10 employs or incorporates variable characteristics of reference generation circuitry (for example, an automatic slicer level circuitry in a receiver) to generate, measure and/or record such test performance data. With reference to FIGURE 10, the levels of the reference generation circuitry may be repeatedly adjusted and the performance of system 10 at the "new" slicer levels may be detected, measured and/or recorded. In this embodiment, the offset may be accomplished by changing the resistor values (in a manner similar to that as illustrated in FIGURE 12B) or by modulating the DAC output current, I. Indeed, it should be noted that additional information regarding the reference generation circuitry may be found in Application Serial No. 10/222,073, entitled "System and Method for Providing Slicer Level Adaptation", Filed August 16, 2002, which is hereby incorporated by reference, in its entirety, herein.

Similar to the embodiments relating to varying the signal level of output driver 108, processor 500 may calculate, derive and/or determine a relationship between the test performance data generated using the variations in reference levels of the reference generation circuitry. Based at least in part on that relationship, processor 500 may determine the performance of system 10 when programmed in a mission or normal mode configuration.

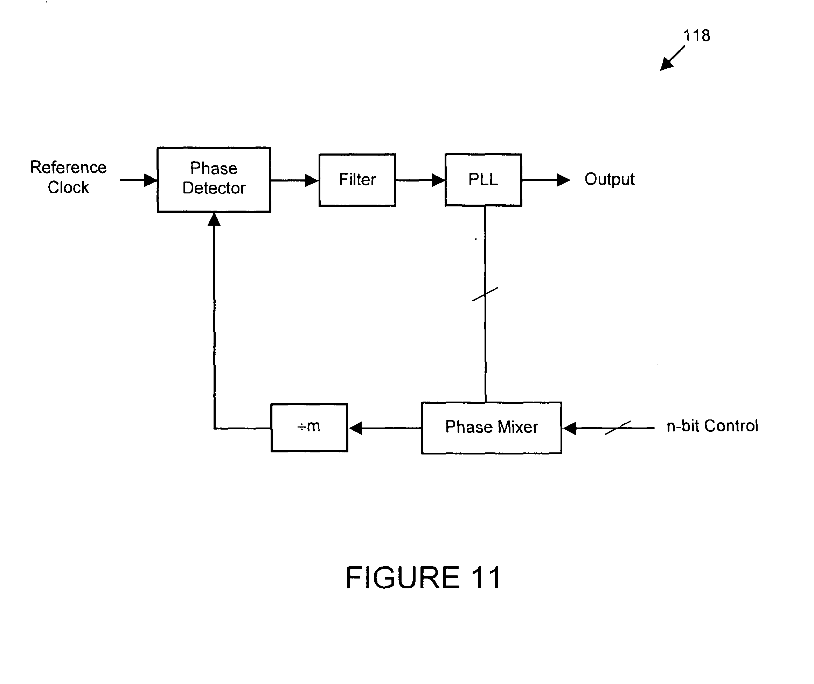

In another embodiment, system 10 employs clock alignment circuitry 204 to generate test performance data. In this regard, system 10 controls the jitter of the clock as an operating or test parameter in test mode. For example, with reference to FIGURE 11, clock alignment circuitry 204 (located in receiver 200) may be repeatedly offset from an optimum, enhanced, selected and/or enhanced operating condition to change or "degrade" the performance of system 10 in order to generate test performance data. In this embodiment, clock alignment circuitry 204 may be controlled (i.e., repeatedly varied) using the n-bit selection signals for the phase mixer to produce and select one of 2ⁿ different clock phases to be used by the phase detector.

As the performance of the clock alignment circuitry 204 varies, system 10 may measure and/or record its performance in the same manner as described above with respect to the output signal of output driver 108. Using this test performance data, processor 500 may calculate, derive and/or determine a mathematical relationship between the test performance data (using, for example, Taylor expansion or regression fit techniques) from which the performance of system 10 when programmed in a mission or normal mode configuration may be determined or predicted.

It should be noted that clock alignment circuitry in transmitter 100 may also be employed to generate test performance data. In this regard, circuitry similar to that illustrated in FIGURE 11 may be incorporated into transmitter 100 to controllably alter the width (time) of the "eye" and thereby alter the performance of system 10. The processor 500 may use the test performance data to calculate, derive and/or determine a relationship between the test performance data and, using the relationship, processor 500 may determine or predict the performance of system 10 as it is programmed in a mission or normal mode configuration.

Further, in another embodiment, system 10 may employ termination resistors 112 to generate, measure and/or record test performance data. With reference to FIGURE 12A, termination resistors 112 may be controllably offset from a desired, given, selected, preset, predetermined and/or optimum resistance value in the test mode in order to generate test performance data. In one embodiment, the resistance values of termination resistors 112 may be adjusted by selectively incorporating or eliminating certain resistance elements of resistors 112. In this regard, with reference to FIGURE 12B, the resistance value of resistors 112 may be controlled by eliminating or disabling selective resistor elements of the series resistor chain using shorting transistors that are controlled by system 10 in the test mode. In this way, system 10 may generate, measure, collect and/or record test performance data by varying the termination resistance of resistors 112. In this embodiment, the operating parameter is the resistance value of resistors 112.

It should be noted that the resistors 112 may also be configured using a parallel resistor chain. In this embodiment, parallel paths of a resistor chain may be selectively enabled or disabled to thereby control the effective resistance of termination resistors 112. Indeed, there are many structures and techniques for controlling the resistance of termination resistors 112. As such, all structures and techniques, whether now known or later developed, are intended to be within the scope of the present invention.

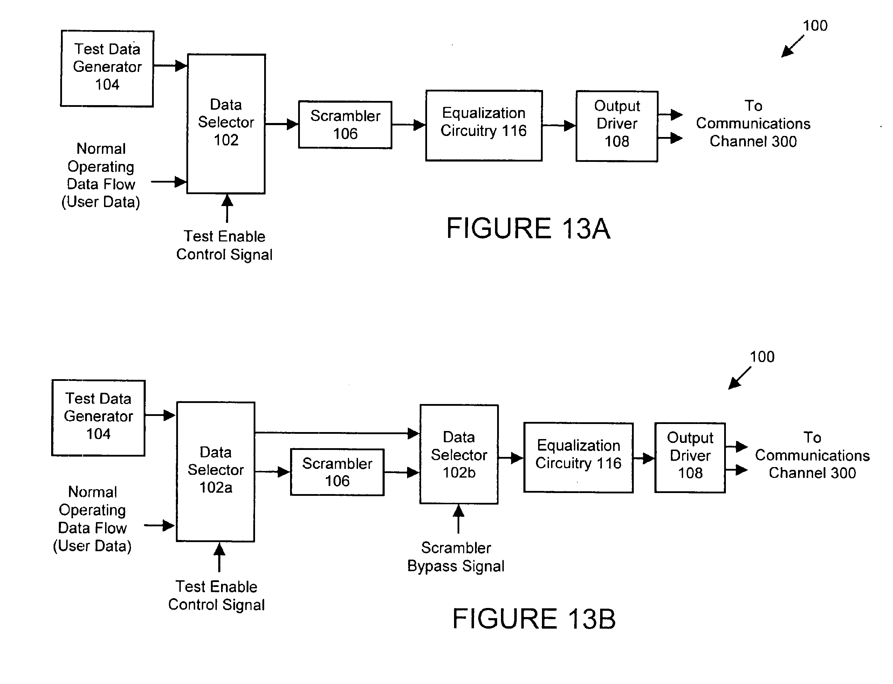

With reference to FIGURES 13A and 13B, in certain embodiments, transmitter 100 may employ equalization circuitry 116 to improve the signal integrity in high-speed communications and enhance the operation and performance of such systems. The equalization circuitry and techniques of system 10 may include leading and/or trailing taps to reduce, minimize, mitigate or effectively eliminate pre-cursor and/or post-cursor intersymbol interference due to, for example, bandwidth limitations and reflections in high-speed digital communication systems. In this embodiment, the present invention employs the characteristics of a lead or trailing tap to generate the test performance data which permits system 10 to determine the performance of system 10 when programmed in a normal or mission mode configuration.

The equalization circuitry 116 in this embodiment may also be employed in the test mode to generate test performance data by varying the characteristics of a tap (from its initial settings) and measuring, determining and/or recording the impact or effect on, or contribution to the performance of the system as a result of those variations. In this embodiment, the parameter(s) are repeatedly varied to "degrade" the performance of the system (and/or components thereof) so that the ER of the system (or component thereof) may be measured within a given time period. As mentioned above, the impact or effect on the performance of the system (e.g., the degradation in performance), in relation to the variation, may be used to characterize and/or evaluate the performance of the system (and/or components of the system).

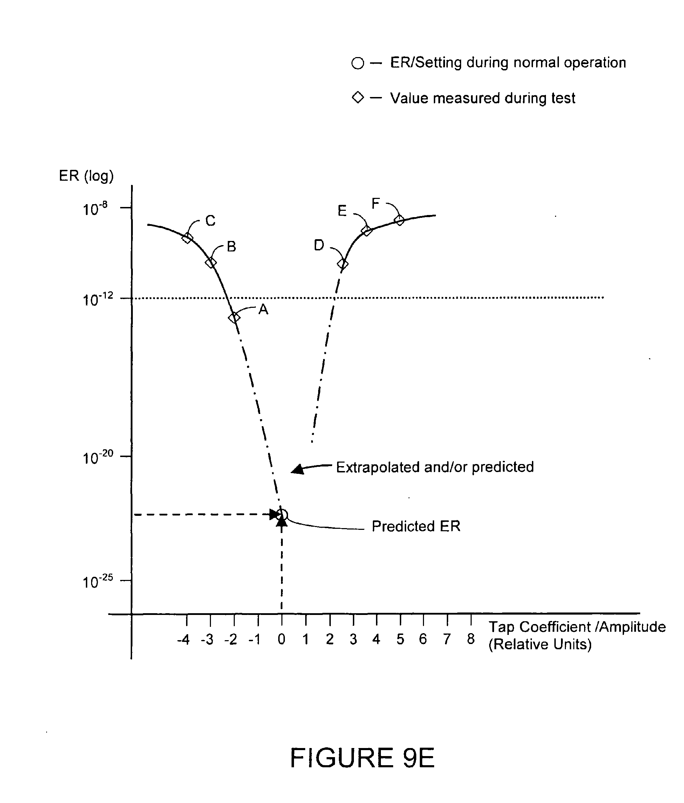

In this embodiment, the operating parameter may be the position of the tap relative to the symbol or data tap, the amplitude of the signal generated by the tap (which may be determined by the value of the tap coefficient), and the duration of the tap (that is, the pulse duration of the equalization signal attributed to the tap). For example, where the operating parameter is the amplitude of the equalization signal generated by the selected tap, the coefficient of the tap may be repeatedly increased and/or decreased to generate the test performance data. This may cause the ER of system 10 to increase. For example, with reference to FIGURE 9E, the tap coefficient may be varied to provide test performance data that processor 500 employs to determine an ER of 10⁻¹⁴, 10⁻¹⁰, 10⁻⁹, 10⁻¹⁰, 10⁻⁹, and 10⁻⁸, identified as "A", "B", "C", "D", "E" and "F", respectively, for the respective variations of the amplitude of the signal level attributed to the selected tap.

Using the data obtained, measured and/or recorded during the test mode, processor 500 may determine, calculate and/or derive a relationship based on that data (illustrated as the dashed line in FIGURE 9E). In this way, processor 500 may determine or predict the ER of system 10, when system 10 is programmed in its mission mode or normal operating conditions. As illustrated in FIGURE 9E, processor 500 may determine or predict an ER of system 10 to be 10⁻²².

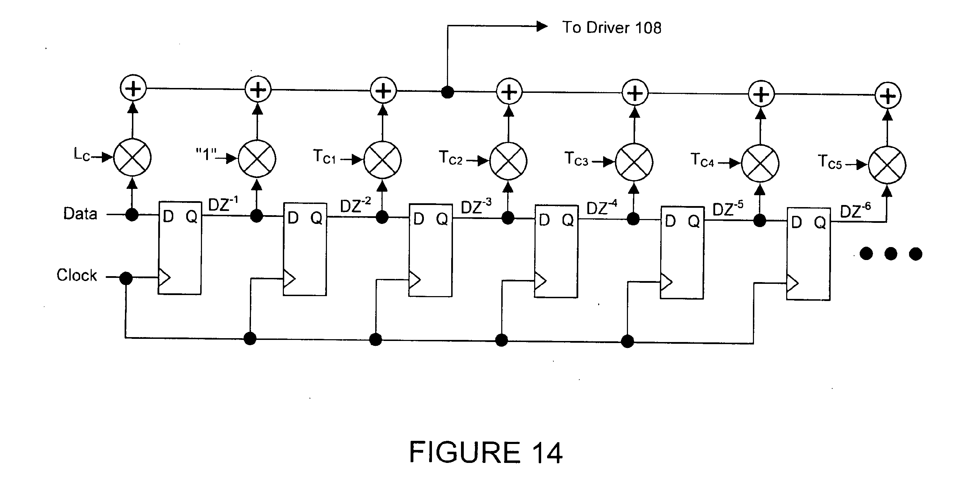

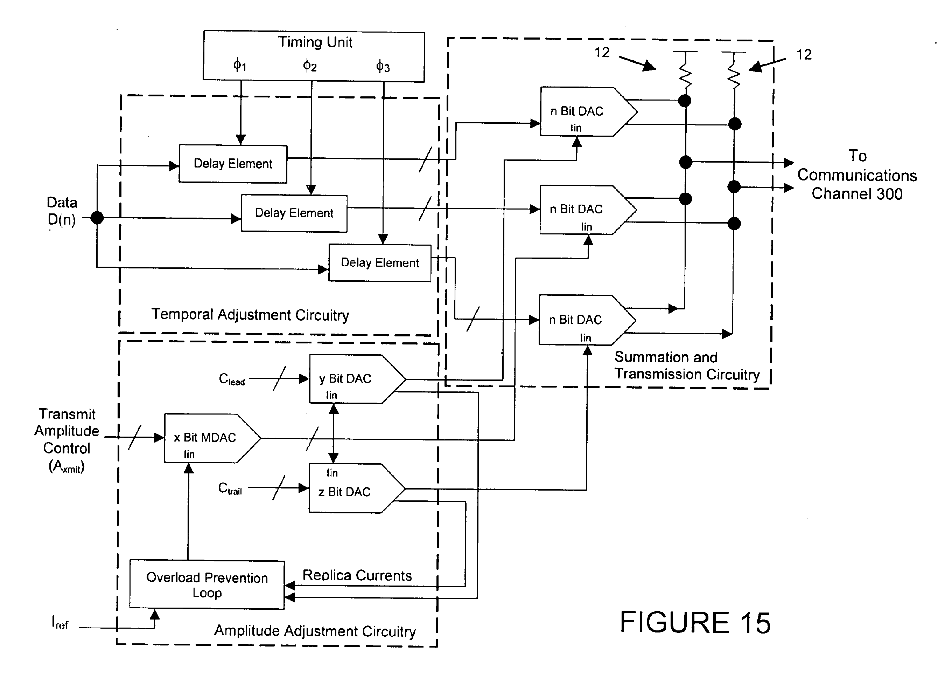

With reference to FIGURES 14 and 15, equalization circuitry 116 may include a plurality of taps each having controllable coefficients, durations and locations. Each of these characteristics of the tap(s) may be employed as an operating or test parameter. Additional details regarding the structure, control, operation, initialization and programming of certain embodiments of equalization circuitry 116 may be found in U.S. Patent Application Serial No. 10/269,446 entitled "System and Method of Equalization of High Speed Signals", filed October 11, 2002 (hereinafter "'the '446 application"). The '446 application is hereby incorporated by reference, in its entirety, herein.

It should be noted that other structures, control, operations, initialization and programming techniques of equalization circuitry 116 of FIGURES 13A and 13B are contemplated and may be implemented in the present invention. As such, all types and forms of equalization circuitry, whether now known or later developed, are intended to be within the scope of the present invention.

It should be further noted that it may be advantageous to select an operating or test parameter (for example, a characteristic of leading or trailing tap) that provides the greatest impact on the performance of system 10 while also having a sufficient degree or granularity of controllable variation to obtain, measure, record and/or sense reliable test performance data. Moreover, this may facilitate system 10 collecting, measuring, obtaining and/or determining an adequate number of test performance values from which processor 500 may determine a mathematical relationship that fits or accommodates those values. In this way, processor 500 may more accurately determine or predict the ER of system 10 when system 10 is configured in a mission-mode or normal operating configuration.

Further, as mentioned above, it may be advantageous to include an overall range and a granularity of control of the operating parameter that exceeds the range and control, which is necessary, required and/or desired for normal operation. For example, where system 10 controllably varies the coefficient of a tap of equalization circuitry, it may be advantageous to include a range of operation, and a control of that range (i.e., granularity), that exceeds system requirements or needs. In this way, system 10 may generate more test performance data, which may be used by processor 500 to more accurately determine, derive and/or calculate the performance characteristics of system 10 for a particular configuration of the circuitry of system 10.

As mentioned above, in another embodiment, system 10 employs a test parameter to measure, characterize and/or evaluate (in situ or otherwise) the performance of high-speed communication systems. In this regard, system 10 may include circuitry that is typically used only in the test mode to facilitate characterization and/or evaluation of system 10. For example, a leading and/or trailing tap may be incorporated into equalization circuitry 116 to generate test performance data for characterizing, measuring and/or evaluating the performance system when configured in a mission or normal mode. That lead and/or trailing tap may not be used when the system is established in a mission or normal mode configuration. However, a characteristic of that leading and/or trailing tap may be varied, in a manner described above, to generate the test performance data. That characteristic, in this example, is the test parameter. Thus, for a given configuration, the test parameter is employed only to generate test performance data during characterization and/or evaluation of the system in the test mode.

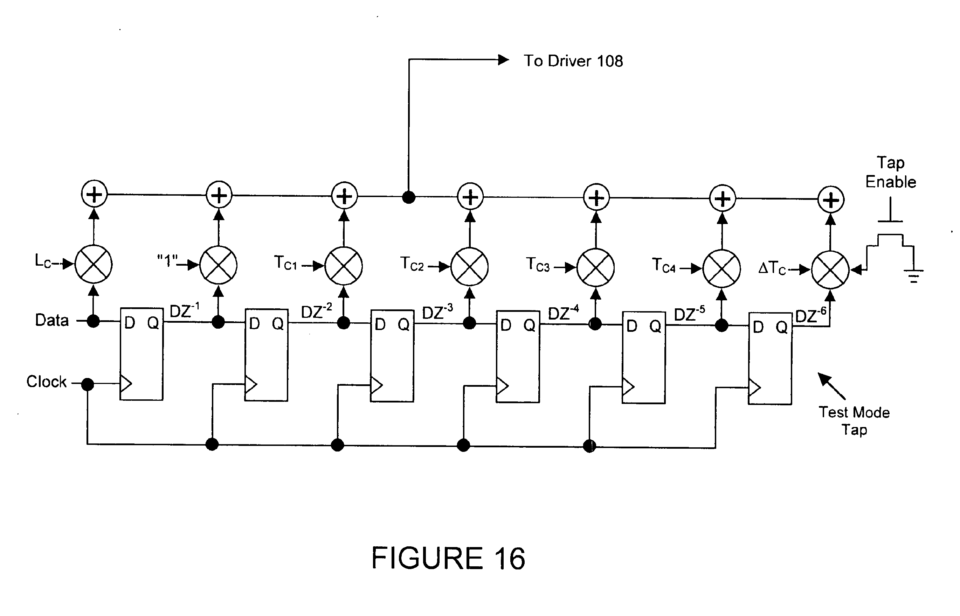

With reference to FIGURE 16, in one embodiment, the equalization circuitry includes a trailing tap that is incorporated into equalization circuit 116 when system 10 is in the test mode. In this regard, when system 10 is in the test mode, the tap enable signal closes a switch and thereby incorporates the test mode tap into the signal path. The test parameter in this embodiment may be the amplitude of the coefficient of the test mode tap.

The operation of system 10 is essentially the same whether implementing a test parameter or an operating parameter to generate test performance data. In the embodiment illustrated in FIGURE 16, the amplitude of the equalization signal from the test mode tap is repeatedly varied (increased and/or decreased) to modify (for example, "degrade") the performance of system 10. The processor 500 uses the test performance data to determine, calculate and/or derive a relationship between that data from which processor 500 may extrapolate, determine or predict the performance of system 10 when system 10 is configured, for example, in its mission mode or normal operating configuration.

It should be noted that there are many techniques of and structures to "disconnect" or eliminate a tap of equalization circuitry. For example, with continued reference to FIGURE 16, the tap coefficient (ΔT_{c}) may be set, programmed or pre-programmed to zero, thereby effectively eliminating the test mode tap from equalization circuitry 116 during, for example, mission mode or normal operation. All techniques of and structures to "disconnect" or eliminate a tap of equalization circuitry during a given mode of operation (for example, normal mode), whether now known or later developed, are within the scope of the present invention.

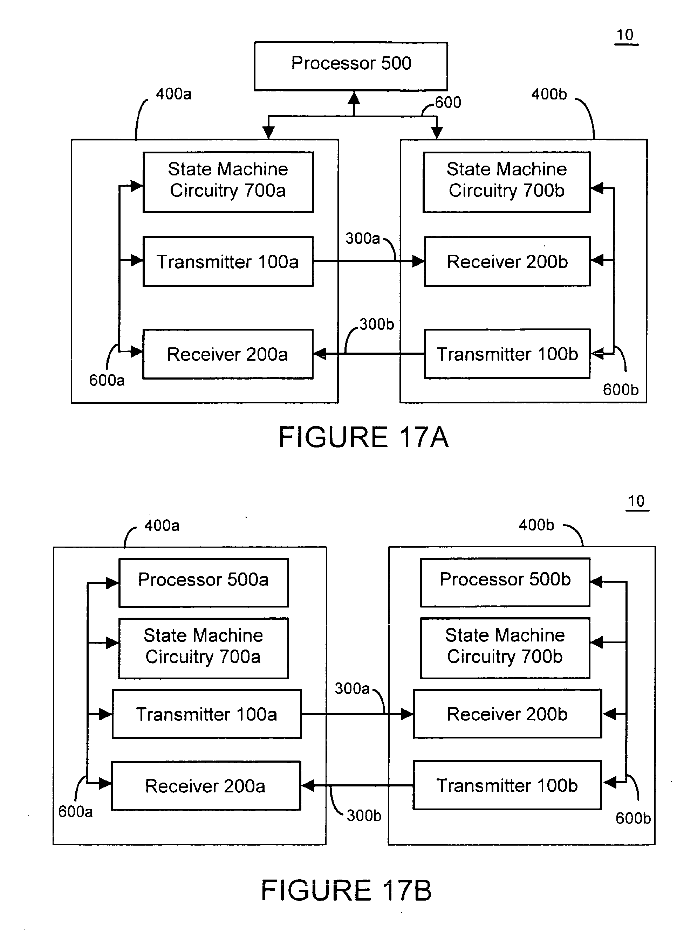

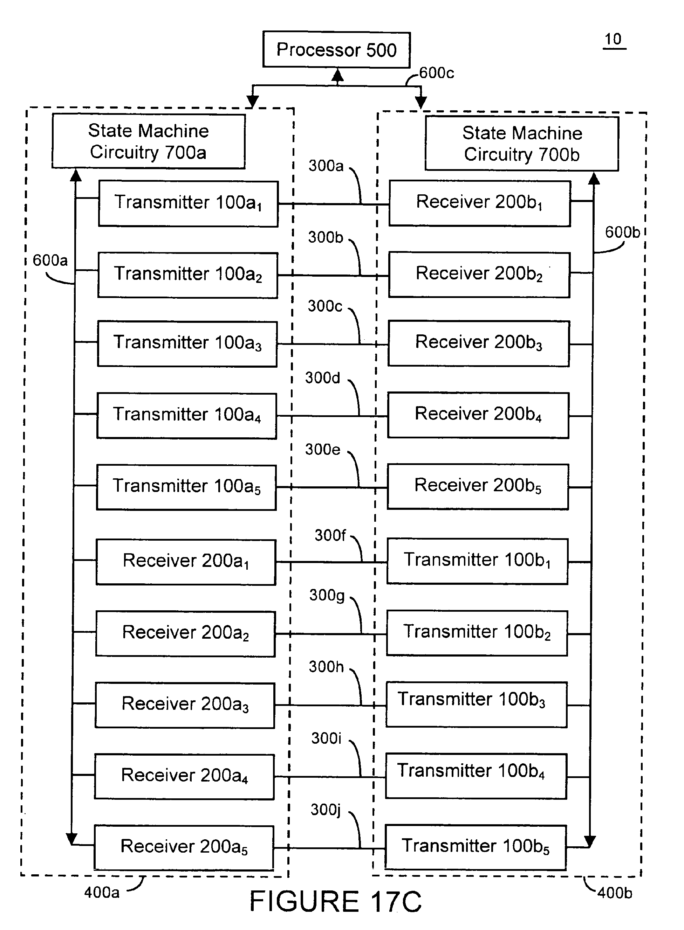

It should be further noted that there are many techniques of, and structures for orchestrating, synchronizing and/or implementing the test mode. As mentioned above, processor 500 may perform all of the functions and operations to orchestrate synchronize and/or implement the test mode of system 10 (see, for example, FIGURES 3A, 3B, 3C, 7 and 8). With reference to FIGURES 17A, 17B and 17C, in other embodiments, transmitters 100, receivers 200 and/or transceivers 400 may include state machine circuitry 700 to implement one, some or all of the functions or operations of processor 500. For example, state machine circuitry 700 may be incorporated into transceivers 400 to orchestrate, implement and/or coordinate altering, modifying and/or changing the state of the operating or test parameter during test mode.

Moreover, state machine circuitry 700 may also synchronize the state of the operating or test parameters and the detection of errors between the data stream transmitted by transmitter 100 and the data stream received by receiver 200 during test mode. In this regard, state machine circuitry 700 may change the state of the operating or test parameter and notify processor 500 that certain test performance data for a particular setting has been collected. The processors 500 may, as described above, use the test performance data to determine, calculate and/or derive a relationship between that data from which the performance of system 10 in a certain or given configuration (for example, in its mission mode or normal operating configuration) may extrapolated, determined or predicted.

The state machine circuitry 700 may be preset, pre-programmed or programmable (via, for example, processor 500 and/or the system designer, operator or user). As such, the parameter employed during test mode may be preset, pre-programmed or programmable. Indeed, the initial configuration of system 10 in test mode may be controlled or determined by state machine circuitry 700.

Moreover, state machine circuitry 700 may also control or determine the states of the parameter(s), the incremental change of the parameter(s), the order of the change of the states of the parameter(s), and the granularity of the states of the parameter(s). That control or determination may also be preset, pre-programmed or programmable (via, for example, processor 500 and/or the system designer, operator or user). In this embodiment, state machine circuitry 700 may also synchronize the control or determination of the parameter(s), as described above, with the detection of the ER of system 10 when in a particular test mode configuration.

Further, state machine 700 may also control or determine the overall test mode period and the individual periods of data collection of the ER of system 10 for a given test mode configuration. The state machine 700 may be preset, pre-programmed and/or programmable and, as such, the time period of testing as well as the individual time periods of data collection for a given test mode configuration may be predetermined, pre-programmed or programmable (for example, by processor 500 or the system designer, the user and/or the operator). In this way, the test time of system 10 may be adjusted to accommodate different situations; for example, component qualification, system qualification (before and/or after installation), and/or periodic or intermittent testing.

As mentioned above, the functions and/or operations of state machine circuitry 700 may be wholly or partially performed or implemented by processor 500. In this regard, processor 500 may determine the overall test time and individual test time periods and, based, thereon, determine the states of the parameter(s), the incremental change of the parameter, the order of the change of the states of the parameter(s), and the granularity of the states of the parameter(s) to be implemented by state machine circuitry 700. All configurations and permutations of the performance or implementation of the test mode functions and/or operations by processor 500 and/or state machine circuitry 700, whether now known or later developed, are intended to be within the scope of the present invention.

In another aspect, the performance characterization techniques and structure of the present invention may be implemented in a system having a plurality of transceivers configured, arranged or connected to form a plurality of channels or links (i.e., transmitter-receiver pairs connected by a communications channel). Each link is likely to have a unique performance since transmitter 100, receiver 200 and communications channel 300 each have a distinct set of properties relative to similar components (for example, due to manufacturing, fabrication or system integration tolerances) that may impact the performance of the link.

For example, with reference to FIGURE 3C, test performance data for each transmitter 100 and receiver 200 pair may be measured, determined and collected for each of the links (e.g., transmitter 100a₁ - receiver 200b₁ connected via communications channel 300a). The processor(s) 500 may analyze the data and determine a relationship from which the performance of each transmitter 100 and receiver 200 pair of system 10, when programmed in a particular configuration, for example, in a mission mode or normal operation configuration, may be extrapolated, determined or predicted. Indeed, all of the embodiments described above with respect to the characterization and/or evaluation of system 10 in the test mode are applicable to the multi-link embodiment. For the sake of brevity, that discussion will not be repeated.

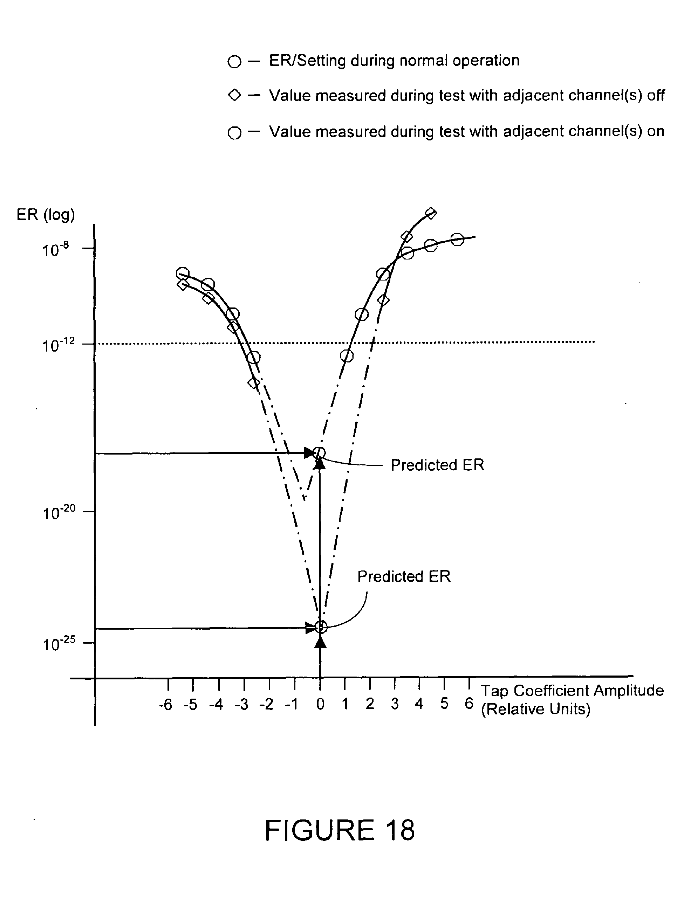

In a multi-link environment, the operations of one channel may impact another channel. That is, in a system including a plurality of channels, the performance of a given channel may be impacted by the operating conditions of the other channels of system 10. With reference to FIGURE 3C, the performance characteristics of transmitter 100a₄ (and/or link or channel: transmitter 100a₄ - receiver 200b₄ - communications channel 300d) may be impacted or effected by, for example, cross-talk from adjacent transmitters, receivers, and/or links or channels (among others), namely transmitter 100a₃ - receiver 200b₃ - communications channel 300c, and transmitter 100a₅ - receiver 200b₅ - communications channel 300e. The impact or effect may, in certain circumstances, have a measurable and/or debilitating affect on the performance of certain channels and, as such, the overall system 10 (see, for example, FIGURE 18).

Thus, in one embodiment of the present invention, system 10 includes techniques and circuitry to measure, inspect, characterize and/or evaluate the performance, for example the ER, of one, some or all channels of system 10 (and/or components of those channels) in situ - that is, in the environment and/or in the configuration in which the system and/or components are used during normal, mission-mode or typical operation. in this way, a more accurate representation of the performance of system 10 (and components thereof) may be measured, determined and/or evaluated and, in certain circumstances a more accurate representation of a "worst" case, "best" case and "typical" case performance may be measured, determined and/or evaluated for one, some or all of the channels of system 10.

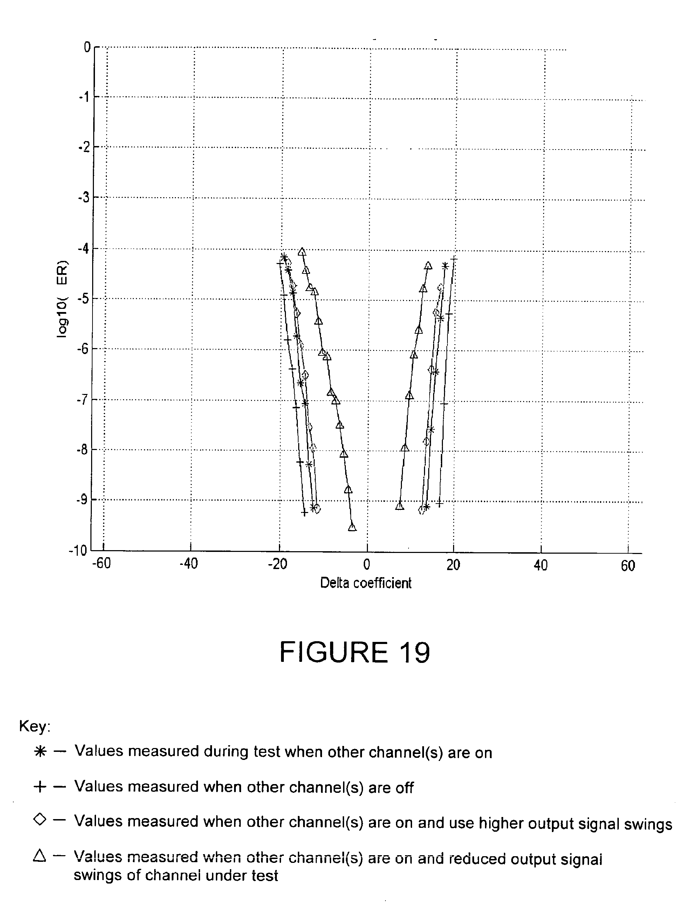

With reference to FIGURES 3C, 7, 8 and 17C, in one embodiment, system 10 collects, measures and/or analyzes test performance data of at least one link while one, some or all adjacent or nearby links are transmitting and receiving data. For example, in one embodiment, system 10 may place transmitter 100b₄ - receiver 200b₄ pair in test mode while instructing adjacent transmitter-receiver pairs to communicate random or pseudo-random data, large signal swings, small signal swings and/or combinations or permutations thereof (see, for example, FIGURE 19). The system 10 may repeat this process for some or all of the transmitter-receiver pairs. Thereafter, processor 500 may evaluate the test performance data and/or the performance characteristics of one, some or all of the transmitter-receiver pairs (i.e., links or channels) to determine the absolute and/or relative performance of the links under the various tests conditions (i.e., adjacent and/or nearby links communicating random or pseudo-random data, large signal swings, small signal swings and/or combinations or permutations thereof). For example, processor 500 may evaluate and/or analyze the results to determine the channel(s) that present the lowest cross-talk immunity, lowest ER, highest cross-talk immunity, and/or highest ER under one, some or all of the test conditions. This information allows the system designer and operators to better understand the system, in situ, under the various operating conditions.

Additionally, operating conditions may then be adjusted to improve the performance of weaker links in the system, at the possible "expense" of stronger links, so as to improve the overall system performance. For example, in one embodiment, a link(s) having been determined to be superior to adjacent links, based for example, on measured or predicted ER (using, for example, the technique as described above), may have its equalization reduced in order to enhance the performance of the adjacent links. In this regard, reducing the equalization of the stronger link (i.e., reducing the peak transmit signal levels) will likely reduce the performance of that link but may enhance the performance of the adjacent weaker links because reducing the equalization will reduce the crosstalk being generated or caused by the stronger link in relation to the adjacent weaker link(s).

It should be noted that the amount of reduction in equalization on the stronger link(s) may be based on the measured or predicted ER at the reduced equalization level. The processor may determine a preferred, optimum or enhanced system performance using the measured or predicted ER of the channels/links of the system when configured to reduce crosstalk (i.e., at the reduced equalization level). For example, the processor may determine an optimum or enhanced system operating condition (via, for example, an iterative process) by evaluating the reduction in performance of the stronger links (for example, by reducing the amount of equalization) and the enhancement of the performance of the weaker links (for example, via the reduction of crosstalk) using the techniques for determining a measured or predicted ER of the channels/links of the system, as described above. Thus, in this embodiment, the performance of weaker links may be improved at the "expense" of the performance of the stronger links in order to improve overall system performance.

It should be noted that other performance parameter may be employed to enhance the performance of weaker link(s) at the "expense" of reducing the performance of the stronger link(s) in order to improve overall system performance. For example, the system may adjust the transmit signal level of stronger link(s) to enhance the performance of the weaker link(s). By doing so, the overall performance of the system may be improved. Indeed, any performance parameter that adjusts the performance of certain links in an effort to adjust the performance of other links may be employed to enhance the overall performance of the system. All such performance parameters, whether now known or later developed, are intended to be within the scope of the present invention.

Indeed, in certain embodiments, processor 500 may identify which channel(s) are above or below a threshold performance characteristic, for example, ER or cross-talk immunity. This information may be used to determine whether the system (or a component and/or channel thereof) meets minimum acceptable performance standards. In those instances where a component of the system fails to meet such standards, it may be disabled, removed and/or substituted with another component. Where the component is replaced, the system may again conduct performance characteristic testing to determine if the system, new component(s) and/or channel(s), which includes the new component(s), meet or exceed (and/or by a how much or amount) minimum acceptable performance standards.

In addition, the performance of system 10 (and/or devices thereof) may be measured, determined, inspected, characterized and/or evaluated in the manners described above at installation and/or after installation (for example, during system evaluation/inspection/test, during system initialization, re-initialization and/or at start-up or power-up). The system 10 may periodically and/or intermittently initiate test mode for one, some or all of the components and/or channels to, for example, ensure that the system and/or components are operating properly and/or ensure that the system and/or devices are within acceptable operating parameters. The system 10 may also periodically and/or intermittently initiate test mode to identify an imminent failure and/or decrease in the performance (whether unacceptable or otherwise) and/or determine or predict a failure and/or decrease in performance. In this way, the system operator may monitor the performance of the system (and channels) and, for example, determine whether one, some or all components and/or channels are above, at or below minimum acceptable performance criteria or standards, and by how much or amount such components and/or channels are above, at or below minimum acceptable performance criteria or standards.

It should be noted that there are many different test patterns that may be implemented in the present invention to supplement or augment normal or typical in situ testing. For example, a given link or channel (or group of links or channels) may undergo test performance characterization while adjacent links communicate a relatively noisy data stream, or a relatively uniform test data stream (having large signal swings or small signal swings). In addition, a given link or channel (or group of links or channels) may undergo test performance characterization while adjacent links communicate signals having an alternating large signal swing or small signal swing pattern. In this way, the operation and performance of system 10 may be more fully understood. Thus, all test patterns, whether now known or later developed, are intended to be within the present invention.

In another embodiment, system 10 may introduce or inject an externally generated disturbance (for example, an AC noise source) into one, some or all of the channels of system 10 and instruct one, some or all of the channels to perform a test or collect, measure and/or generate test performance data. In this regard, the performance characteristics of one, some or all of the channels of system 10 may be acquired, measured, analyzed and/or determined (as described above) while the externally generated disturbance is "complicating" or affecting communications. Thereafter, processor 500 may evaluate and/or analyze the test results to determine, for example, whether a given channel presents the lowest ER or highest ER under these test conditions. This information allows the system designer and operators to further understand the system, in situ, under the various operating conditions.

As mentioned above, the system may be evaluated, in situ, under many different operating conditions and environments. These operating conditions and environments may be, for example, environmental based (for example, temperature or EMI) and/or system based (for example, the operations of adjacent channels and/or transceivers under given conditions to "enhance" and/or change or manipulate the communications environment of a given transmitter, receiver, channel and/or transceiver). All operating conditions, environments and test patterns, whether now known or later developed, are intended to be within the scope of the present invention.

There are many inventions described and illustrated herein. While certain embodiments, features, materials, configurations, attributes and advantages of the inventions have been described and illustrated, it should be understood that many other, as well as different and/or similar embodiments, features, materials, configurations, attributes, structures and advantages of the present inventions that are apparent from the description, illustration and claims. As such, the embodiments, features, materials, configurations, attributes, structures and advantages of the inventions described and illustrated herein are not exhaustive and it should be understood that such other, similar, as well as different, embodiments, features, materials, configurations, attributes, structures and advantages of the present inventions are within the scope of the present invention.

As mentioned above, many operating and test parameters may be employed to generate test performance data which may be used to determine, calculate, predict and/or derive the performance of system 10 when programmed in a normal or mission mode configuration. For example, system 10 may generate, measure and/or record such test performance data using the characteristics of a reference generation circuitry, for example, an automatic slicer level circuitry in a receiver (see, for example, FIGURE 10), clock alignment circuitry in transmitter 100 and/or receiver 200 (see, for example, FIGURE 11), termination resistors in transmitter 100 and/or receiver 200 (see, for example, FIGURES 12A and 12B), and/or a leading tap or trailing tap of a filter or equalization circuitry (see, for example, FIGURES 13A, 13B, 14, 15, 16 and 18) whether such filter or equalization circuitry is incorporated in the transmitter or receiver. The characteristics of other circuitry may also be used as operating and test parameters in the test mode. Moreover, permutations of the above-reference characteristics may also be used. As such, all circuitry and/or algorithms that may be controllably varied to alter the performance of system 10 may be used in the test mode to generate test performance data.

It should be noted that the equalization circuitry may be implemented in the transmitter and/or the receiver. Here, the operating and/or test parameter may be the position of the tap relative to the symbol or data tap, the amplitude of the equalization signal generated by the tap (which may be determined by the value of the tap coefficient), and the duration of the tap (that is, the pulse duration of the equalization signal attributed to the tap). Thus, as described in detail above, many characteristics of such transmit and/or receive equalization circuitry may be used as a parameter in the test mode.

Further, as mentioned above, operating parameters that are used in test mode may include a range and granularity of operation that exceeds that necessary, required and/or desired for normal operation. For example, where system 10 controllably varies the coefficient of a tap of a filter or equalization circuitry, it may be advantageous to include a range of operation, and a control of that range (i.e., granularity), that exceeds system requirements or needs. In this way, system 10 may generate more test performance data, which may be used by processor 500 to more accurately determine, derive, predict and/or calculate the performance of system 10.

Moreover, the performance characterizing techniques and circuitry described above may be implemented to "screen" systems. For example, the results of the test performance may be used to determine whether a system (and/or component(s) thereof) fails to meet, meets, or exceeds a given pass/fail metric or a pass/fail range or window. This technique may be performed at installation and/or after installation. Where performed after installation, processor(s) may be employed to substitute, arrange and/or configure systems and channels thereof in order to provide suitable performance characteristics of the system.

Further, the performance characterizing techniques and circuitry may be employed to "screen" components prior to installation into the system. In this regard, the component is placed into a known system (for example, a "fixed" test fixture, having known attributes) and the performance characteristics, for example, the ER of the component, are determined. The results of the ER measurements may be used to determine whether the component fails to meet, meets, or exceeds a given pass/fail metric or a pass/fail range or window. This technique may be performed at installation and/or after installation as well.

Further, as described above, processor 500 may be integrated on a transmitter, receiver, and/or transceiver. The processor 500 may also be incorporated into system 10 at a board level as a discrete component or may be external to system 10. Indeed, processor 500 may be a discrete device(s) that is located near or remote (for example, in another room or location) from the transmitter, receiver, and/or transceiver. All configurations and permutations of integrating, incorporating and/or employing processor 500, whether now known or later developed, are intended to be within the scope of the present invention.

Moreover, processor 500 may include circuitry to store algorithms and software that facilitate processing the test performance data, determining and calculating a relationship between the test performance data, and/or facilitate determining or predicting the ER of the system. The processor 500 may also include circuitry to facilitate acquisition of information from the transmitter(s), receiver(s) and/or transceiver(s), manage data storage, and/or interface with users/operators.

Further, as described in detail above, system 10 may include processor 500 and/or state machine circuitry 700 to implement the test mode operations. Processor 500 may execute a fixed algorithm (for example, stored in a PROM) or may execute a modifiable algorithm (i.e., programmable or re-programmed after design), for example, an algorithm that may be programmed or re-programmed after device and/or system fabrication and/or installation. The state machine circuitry 700 may also be fixed or programmable, for example, to facilitate additional user or system operator control after fabrication or installation.

It should be further noted that the term "circuit" may mean, among other things, a single component or a multiplicity of components (whether in integrated circuit form or otherwise), which are active and/or passive, and which are coupled together to provide or perform a desired function. The term "circuitry" may mean, among other things, a circuit (whether integrated or otherwise), a group of such circuits, a processor(s), a processor(s) implementing software, or a combination of a circuit (whether integrated or otherwise), a group of such circuits, a processor(s) and/or a processor(s) implementing software, processor(s) and circuit(s), and/or processor(s) and circuit(s) implementing software. The term "data" may mean, among other things, a current or voltage signal(s) whether in an analog or a digital form. The term "measure" means, among other things, sample, sense, inspect, detect, monitor and/or capture. Similarly, the phrase "to measure" or similar, means, for example, to sample, to sense, to inspect, to detect, to monitor and/or to capture.

Finally, the term "determine" means, among other things, measures, sample, sense, inspect, detect, calculate and/or capture. Similarly, the phrase "to determine" or similar, means, for example, to measure, to sample, to sense, to inspect, to detect, to calculate and/or to capture.

## Claims

1. A communication system capable of determining a first data error rate of data transmission of the system wherein the system has a first error rate of transmission when the communication system is in a first configuration, the communication system comprising:
a communications channel;
transmitter circuitry, coupled to the communications channel, to transmit a first data stream on the communications channel, the transmitter includes:
output driver circuitry, coupled to the communications channel, to output the first data stream, wherein the output driver includes at least one parameter having a plurality of states and wherein the communication system is in the first configuration when the parameter of the output driver circuitry is in a first state;
receiver circuitry, coupled to the communications channel, to receive a second data stream in response to the first data stream transmitted by the transmitter circuitry, the receiver circuitry includes:
error detection circuitry, coupled to the communications channel, to detect differences between the data of the first data stream and the data of the second data stream; and
a processor, coupled to the receiver circuitry, to determine second, third and fourth error rates of the system when the parameter of the output driver circuitry is in a second state, a third state, and a fourth state, respectively, and wherein the processor determines the first error rate of the system using the second, third and fourth error rates.

2. The system of claim 1 wherein the processor determines a first mathematical relationship using the second, third and fourth error rates, and based on the first mathematical relationship, calculates the first error rate.

3. The system of claim 2 wherein the parameter is the amplitude of the output signal.

4. The system of claim 1 wherein the processor is disposed on an integrated circuit including the receiver circuitry.

5. The system of claim 1 wherein the processor is disposed on an integrated circuit including the transmitter circuitry.

6. The system of claim 1 further including error counter circuitry, coupled to the error detection circuitry, to count the differences detected by the error detection circuitry.

7. The system of claim 1 wherein the processor further determines fifth, sixth and seventh error rates of the system when the parameter of the output driver circuitry is in a fifth state, a sixth state, and a seventh state, respectively, and wherein the processor determines the first error rate of the system using the fifth, sixth and seventh error rates.

8. The system of claim 7 wherein the processor determines a second mathematical relationship using the fifth, sixth and seventh error rates, and based on the second mathematical relationship, calculates the first error rate.

9. The system of claim 8 wherein the first mathematical relationship and the second mathematical relationship provide a double-sided locus.

10. The system of claim 1 wherein the transmitter circuitry further includes state machine circuitry to selectively program the parameter of the output driver circuitry in the second, third and fourth states.

11. The system of claim 1 wherein the communications channel is a backplane.

12. The system of claim 1 wherein the first error rate of transmission is determined in situ.

13. The system of claim 1 wherein the transmitter circuitry includes equalization circuitry having at least one leading tap and at least one trailing tap.

14. A communication system capable of determining a first data error rate of data transmission of the system wherein the system has a first error rate of transmission when the communication system is in a first configuration, the communication system comprising:
a communications channel;
transmitter circuitry, coupled to the communications channel, to transmit a first data stream on the communications channel, the transmitter includes:
output driver circuitry, coupled to the communications channel, to output a first data stream; and
equalization circuitry, coupled to the output driver circuitry, wherein the equalization circuitry includes at least one parameter having a plurality of states and wherein the communication system is in the first configuration when the parameter of the equalization circuitry is in a first state;
receiver circuitry, coupled to the communications channel, to receive a second data stream in response to the first data stream transmitted by the transmitter circuitry; and
a processor, coupled to the receiver circuitry, to determine second, third and fourth error rates of the system when the parameter of the equalization circuitry is in a second state, a third state, and a fourth state, respectively, and wherein the processor determines the first error rate of the system using the second, third and fourth error rates.

15. The system of claim 14 wherein the communications channel is a backplane.

16. The system of claim 14 wherein the parameter is the amplitude of an equalization signal generated by the equalization circuitry.

17. The system of claim 16 wherein the wherein the processor determines a first mathematical relationship using the second, third and fourth error rates, and based on the first mathematical relationship, calculates the first error rate.

18. The system of claim 14 wherein the parameter is the duration of the equalization signal.

19. The system of claim 14 wherein the parameter is the location of the equalization signal.

20. The system of claim 14 wherein the processor further determines fifth, sixth and seventh error rates of the system when the parameter of the equalization circuitry is in a fifth state, a sixth state, and a seventh state, respectively, and wherein the processor determines the first error rate of the system using the fifth, sixth and seventh error rates.

21. The system of claim 20 wherein the processor determines a second mathematical relationship using the fifth, sixth and seventh error rates, and based on the second mathematical relationship, calculates the first error rate.

22. The system of claim 21 wherein the first mathematical relationship and the second mathematical relationship provide a double-sided locus.

23. The system of claim 14 wherein the processor is disposed on an integrated circuit including the receiver circuitry.

24. The system of claim 14 wherein the processor is a discrete integrated circuit.

25. The system of claim 24 wherein the receiver circuitry further includes error detection circuitry, coupled to the communications channel, to detect differences between the data of the first data stream and the data of the second data stream.

26. The system of claim 14 wherein the first error rate of transmission is determined in situ.

27. A method for determining a first error rate of transmission of data in a communication system in situ, wherein the first error rate of the data transmission is the number of differences between a transmitted data stream and a received data stream, for a period of time, when a parameter of the communication system is in a first state, the method comprising:
programming the parameter in a second state;
transmitting a data stream via a communications channel;
receiving a data stream, via the communications channel, in response to the transmitted data stream;
calculating a second error rate when the parameter is in the second state by determining the number of differences between the transmitted data stream and the received data stream, for a period of time, when the parameter is in the second state;
programming the parameter in a third state;
calculating a third error rate when the parameter is in the third state by determining the number of differences between the transmitted data stream and the received data stream, for a period of time, when the parameter is in the third state;
programming the parameter in a fourth state;
calculating a fourth error rate when the parameter is in the fourth state by determining the number of differences between the transmitted data stream and the received data stream, for a period of time when the parameter is in the fourth state;
determining a first mathematical relationship using the second error rate, third error rate and fourth error rate; and
determining the first error rate using the first mathematical relationship.

28. The method of claim 27 wherein the parameter is an operating parameter.

29. The method of claim 27 wherein the parameter is a test parameter.

30. The method of claim 29 wherein the test parameter is zero when the parameter is programmed in the first state.

31. The method of claim 27 wherein the parameter is the signal amplitude of the data of the data stream.

32. The method of claim 27 wherein the parameter is the coefficient of a tap of equalization circuitry.

33. The method of claim 27 wherein the parameter is the location of a tap of equalization circuitry.

34. The method of claim 27 wherein the parameter is the duration of the equalization signal attributed to a tap of equalization circuitry.

35. The method of claim 27 wherein the parameter is the jitter of a clock signal.

36. The method of claim 27 wherein the parameter is the resistance of a reference generation circuitry.

37. The method of claim 27 wherein the parameter is the resistance of a termination resistor.

38. The method of claim 27 wherein the parameter is the coefficient of a data tap of equalization circuitry.

39. The method of claim 27 wherein the first error rate of transmission of data in the communication system is determined in situ after installation of the communication system.

40. The method of claim 27 wherein the first error rate of transmission of data in the communication system is determined in situ periodically after installation of the communication system.

41. The method of claim 27 wherein the first error rate of transmission of data in the communication system is determined in situ intermittently after installation of the communication system.

42. The method of claim 27 wherein the first error rate of transmission of data in the communication system is determined in situ, after installation of the communication system, in response to a command from an operator.

43. The method of claim 27 further including:
programming the parameter in a fifth state;
calculating a fifth error rate when the parameter is in the fifth state by determining the number of differences between the transmitted data stream and the received data stream when the parameter is in the fifth state;
programming the parameter in a sixth state;
calculating a sixth error rate when the parameter is in the sixth state by determining the number of differences between the transmitted data stream and the received data stream when the parameter is in the sixth state;
programming the parameter in a seventh state;
calculating a fourth error rate when the parameter is in the seventh state by determining the number of differences between the transmitted data stream and the received data stream when the parameter is in the seventh state;
determining a second mathematical relationship using the fifth error rate, sixth error rate and seventh error rate; and
determining the first error rate using the second mathematical relationship.

44. The method of claim 27 wherein the first mathematical relationship and the second mathematical relationship provide a double-sided locus.
